(19) Europäisches Patentamt
European Patent Office
Office européen des brevets

(11) **EP 4 524 841 B1**

(12) **EUROPEAN PATENT SPECIFICATION**

(45) Date of publication and mention
of the grant of the patent:
**22.07.2026 Bulletin 2026/30**

(21) Application number: **24162173.9**

(22) Date of filing: **07.03.2024**

(51) International Patent Classification (IPC):
*G06Q 10/04* (2023.01)      *G06Q 10/0631* (2023.01)
*G06Q 50/40* (2024.01)      *B61L 27/00* (2022.01)
*B61L 27/12* (2022.01)

(52) Cooperative Patent Classification (CPC):
**G06Q 10/0631; B61L 27/12; G06Q 10/04; G06Q 10/063; G06Q 50/40**

(54) **INFORMATION PROCESSING DEVICE, INFORMATION PROCESSING METHOD, AND COMPUTER PROGRAM**

INFORMATIONSVERARBEITUNGSVORRICHTUNG, INFORMATIONSVERARBEITUNGSVERFAHREN UND COMPUTERPROGRAMM

DISPOSITIF DE TRAITEMENT D'INFORMATIONS, PROCÉDÉ DE TRAITEMENT D'INFORMATIONS ET PROGRAMME INFORMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.09.2023 JP 2023150513**

(43) Date of publication of application:
**19.03.2025 Bulletin 2025/12**

(73) Proprietor: **Kabushiki Kaisha Toshiba**
**Kawasaki-shi, Kanagawa (JP)**

(72) Inventors:
• **OTSUKI, Tomoshi**
**Tokyo (JP)**
• **OGAWA, Shinichiro**
**Kawasaki-shi (JP)**
• **IYAMA, Hitoshi**
**Kawasaki-shi (JP)**
• **KUBO, Hideki**
**Kawasaki-shi (JP)**

(74) Representative: **Marks & Clerk LLP**
**15 Fetter Lane**
**London EC4A 1BW (GB)**

(56) References cited:
**EP-A1- 2 762 382       US-A1- 2020 055 530**
**US-A1- 2022 335 351**

## Description

<u>FIELD</u>

The present approach relates to an information processing device, an information processing method, and a non-transitory computer readable medium.

<u>BACKGROUND</u>

A railway company produces in advance a vehicle operation plan (hereinafter referred to as a train allocation plan) that determines allocation of railway trains to operations, and provides railway train operations in accordance with the train allocation plan. In a case where the number of necessary vehicles is different among operations, each railway train needs to be allocated to an operation so that the number of vehicles of the railway train matches the number of necessary vehicles. A plurality of railway trains are merged (connected) to increase the number of vehicles or a railway train is split to decrease the number of vehicles in some cases.

A known method of producing a train allocation plan is a scheduling method of allocating vehicles to an operation by considering the schedule of examination and cleaning performed for each railway train. With this method, it is possible to consider the schedule of examination and cleaning but it is impossible to consider difference in the number of vehicles among operations. In another method, a vehicle unit allocation plan is produced by considering split and merge of vehicle units based on the relation between the number of seats of each vehicle unit and the number of passengers between stations. This method determines the number of vehicle units necessary for each operation but does not produce a train allocation plan for allocating a railway train to each operation.

EP2762382A1 relates to creating a management plan which does not change a management completion site from an original plan. Operating schedule information which is stored in advance in a storage unit is read, each path from a start site to an end site of each route which is included in the read out management schedule information is respectively represented as one node, and routes which may be managed in sequence based on site and time are connected with links, creating a network model. A node, which represents a route to which a plurality of resources may be allocated, is added to the created network, and a link is added which connects the added node to another node, while taking into account a location whereat it is possible to carry out a merge or separation operation, thus updating the network model. In order to satisfy predetermined conditions (a condition of assigning resources to all routes and a condition of not changing the management completion site from the original plan), a path group is derived which encompasses each node of the network model, thus creating a resource management plan which executes a delivery service.

US2022335351A1 relates to a resource operation planning assistance apparatus for automatically generating a change tendency from a past resource operation planning change history, that uses the change tendency to generate a solution proposal to an inconsistency in a resource operation planning, and presenting the solution proposal together with a priority order. The resource operation planning assistance apparatus includes: a schedule candidate creation unit configured to create a schedule candidate of each resource; a history learning unit configured to learn an operation planning history in advance to generate a schedule change rule; a schedule candidate list creation unit configured to create a schedule candidate list for an operation planning target resource; a planning creation unit configured to create, with respect to at least one violation included in an operation planning, an operation planning for solving the violation; and an operation change content display unit. The resource operation planning assistance apparatus is configured to apply the schedule change rule created by the history learning unit in advance to the schedule candidates created by the schedule candidate creation unit to calculate an adoption rate for each schedule candidate. The operation change content display unit is configured to display the operation planning created by the planning creation unit in a priority order by using, as input, the schedule candidate list for each resource created by the schedule candidate list creation unit.

US2020055530A1 relates to a non-stop train system including a plurality of train cars in communication with one another and in communication with an electronic control module. The train system further includes a track having a plurality of drop off and pick up locations. A prepositioned train car is stopped on the track at one of the drop off and pick up locations. A non-stop express train approaches the drop off and pick up location on the track initiating the prepositioned train car to begin departure. The electronic control module is used to adjust the speed of the non-stop express train and the prepositioned train car based on a detected distance such that a front coupler of the non-stop express train couples to the rear coupler of the prepositioned train car while moving along the track.

<u>BRIEF DESCRIPTION OF THE DRAWINGS</u>

FIG. 1 is a conceptual diagram of a train allocation plan;

FIG. 2A is a diagram illustrating an example of producing the train allocation plan, and FIG. 2B is a diagram illustrating an example of connection constraint;

FIG. 3 is a diagram illustrating an example of the train allocation plan;

FIG. 4 is a diagram illustrating an example of the train allocation plan in a case where the number of vehicles is different among operations;

FIG. 5 is a block diagram illustrating an example of a plan production device according to the present approach;

FIG. 6 is a diagram illustrating an example of plan duration information;

FIG. 7 illustrates an example of small train information;

FIG. 8 illustrates an example of operation information;

FIG. 9 is a diagram illustrating an example of a depot work plan for each small train;

FIG. 10 is a diagram illustrating an example of individual condition information;

FIG. 11 is a diagram illustrating a specific example of problem setting defined based on input information;

FIG. 12 is a diagram illustrating an example of train allocation plan information generated by a train allocation plan producer;

FIG. 13 is a flowchart illustrating an example of the procedure of producing the train allocation plan by the train allocation plan producer;

FIG. 14 is a diagram for description of details of Step 1 in FIG. 13;

FIG. 15 is a diagram illustrating an example of initial solution production;

FIG. 16 is a diagram illustrating an example of constraint violation determination at Step 3 in FIG. 13;

FIG. 17 is a diagram illustrating a specific example of split-merge determination;

FIG. 18 is an explanatory diagram of a back-truck search method using path exchange;

FIG. 19 is a diagram illustrating an example of exchange calculation;

FIG. 20 is a diagram illustrating an example of two times of exchange calculation;

FIG. 21 is a flowchart of improved solution search based on K times of path exchange;

FIG. 22 is a diagram illustrating an example of a solution produced by the train allocation plan producer in a case of the problem setting in FIG. 11;

FIG. 23 is a diagram illustrating an example in which the solution is expressed in an expression different from that in FIG. 22;

FIG. 24 is a diagram illustrating an example of a solution obtained in a second approach;

FIG. 25 is a block diagram illustrating an example of a plan production device according to a third approach;

FIG. 26 is a diagram illustrating the kinds of small trains;

FIG. 27 is a block diagram illustrating an example of a vehicle operation system according to a fifth approach; and

FIG. 28 is a diagram illustrating a hardware configuration of a plan production device that is an information processing device according to each approach.

## DETAILED DESCRIPTION

In a first aspect, an information processing device is provided as recited in claim 1. In a second aspect, an information processing method is provided as recited in claim 17. In a third aspect, a computer program is provided as recited in claim 18.

The present approach will be described below with reference to the accompanying drawings.

First approach

The present approach relates to a railway scheduling technology. In the railway scheduling technology, a vehicle operation plan is a plan related to a vehicle train (hereinafter referred to as a train) and includes a plan (train allocation plan or operation plan) of how to run a train, a plan (depot work plan) of when to perform examination, cleaning, and work on a train, and a plan (shunting plan) of how to move a train between lines (inter-line movement in depot) in a depot to efficiently perform depot work. The present approach mainly relates to the train allocation plan.

The present approach discloses a technology related to a railway train allocation plan, but a plan target is not limited to railway but may be another moving object in which vehicles are connected to provide an operation as a train.

The following describes the outline of production of a train allocation plan (operation plan) of vehicles according to the present approach, and then describes a plan production device configured to produce a train allocation plan.

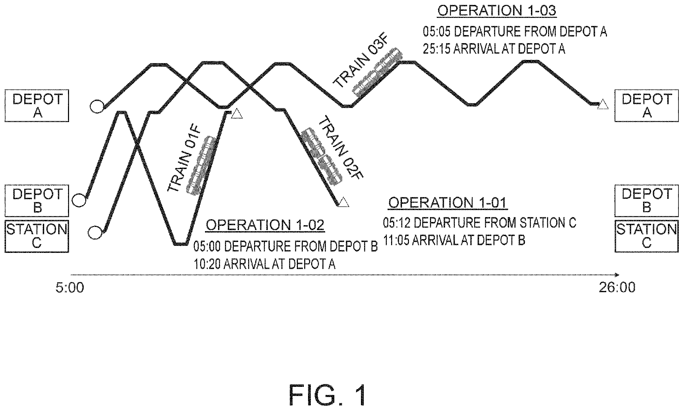

FIG. 1 is a conceptual diagram of a train allocation plan. The horizontal axis represents time, and the vertical axis represents a depot or a station. In some railway business operators, a "operation" (also referred to as a work or a track) that is a continuous timetable line along which an identical train is assumed to run is produced as a railway timetable in advance. Operations 1-01, 1-02, and 1-03 are illustrated in FIG. 1. Each operation has properties of a departure place (also referred to as an outbound place), a departure time (also referred to as an outbound time), an arrival place (also referred to as an arrival place), and an arrival time (also referred to as an inbound time). For example, in operation 1-01, a train departs from station C at 05:12 and arrives at depot B at 11:05 (stays near station C at night). Examples of operations include an operation (morning operation) that a train departs from a depot (or station) in the early morning and returns to the depot (or station) in the morning on the same day, an operation (afternoon operation) that a train departs from a depot in the afternoon and returns to the depot at night on the same day, and an operation (whole-day operation) that a train departs from a depot in the early morning and returns to the depot at night on the same day.

In a case where the kinds of operations are defined in advance as described above, a train allocation plan is a problem of allocating a train to each operation in a mutually exclusive and collectively exhaustive manner. In the example illustrated in FIG. 1, train 02F is allocated to operation 1-01, train 01F is allocated to operation 1-02, and train 03F is allocated to operation 1-03.

Each train needs to be subjected to depot work such as examination and cleaning at a depot between operations. The kinds of examination include general examination, important part examination, monthly examination (also referred to as, for example, sequential examination or state-function examination), and train examination (also referred to as work examination). For example, train examination and cleaning are normally performed at a depot between the morning operation and the afternoon operation. In some cases, a train allocated to an operation of arriving at a station at night stays on a stay line or the like at the station (outside stay) and cannot return to a depot for two days or more in a case of outside stay. In such a case, train examination or cleaning scheduled on the same day potentially cannot be performed.

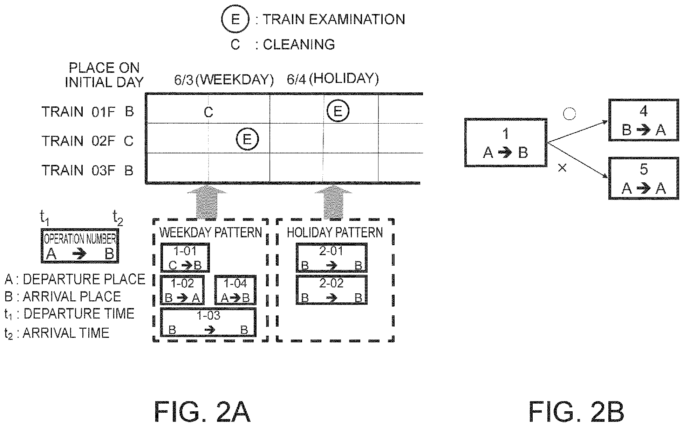

FIG. 2A illustrates an example in which a train allocation plan of trains 01F, 02F, and 03F for 6/3 and 6/4 is produced to satisfy a connection constraint, an initial day constraint, and an examination-cleaning constraint as various constraints in production of a train allocation plan. FIG. 2B is an explanatory diagram of the connection constraint.

A train allocation plan is produced in the form of allocating operations in a table with a vertical axis representing train and a horizontal axis representing date. In this example, each operation is schematically illustrated as a block. The block is referred to as a operation block. As illustrated to the left of the diagram, each operation block includes a departure place and an arrival place. The horizontal width of the operation block has a length in accordance with the time length from the departure time to the arrival time.

Typically, a railway timetable is different between weekdays and holidays, and a set of operations on each of weekdays and holidays is substantially same among days except for a temporary timetable. Thus, an operation set on each day is often defined in several patterns such as a weekday pattern and a holiday pattern. In the diagram, operations in a weekday pattern and operations in a holiday pattern are illustrated as operation blocks. Consider a case where operations defined for 6/3, which is a weekday, and operations defined for 6/4, which is a holiday, are allocated in a collectively exhaustive manner on the table. Operations to be allocated are different between 6/3, which is a weekday, and 6/4, which is a holiday. Operations on 6/3 are four operations 1-01, 1-02, 1-03, and 1-04 of a weekday pattern, and operations on 6/4 are two operations 2-01 and 2-02 of a holiday pattern. Operations 1-03, 2-01, and 2-02 are whole-day operations, operations 1-01 and 1-02 are morning operations, and operation 1-04 is an afternoon operation. In production of a train allocation plan, trains need to be allocated to these operations in a mutually exclusive and collectively exhaustive manner to satisfy various constraints. Allocation in a mutually exclusive manner means that the same train is not allocated in a time during which operation times overlap. The same train is repeatedly allocatable as long as temporal overlapping does not occur.

The various constraints are a "connection constraint", an "initial day constraint", and a "work constraint".

The connection constraint is a constraint that, when connection of operation blocks of each train is viewed in time (horizontal direction of the table), the arrival place of the earlier operation and the departure place of the later operation need to match each other. In the example illustrated in FIG. 2B, the upper operation block connection is allowed ("O" in the diagram) but the lower operation block connection is not allowed ("×" in the diagram) because the arrival place of the earlier operation and the departure place of the later operation do not match each other.

The initial day constraint is a constraint that a place on the initial day and the departure place of the first operation block need to match each other.

The initial day constraint and the connection constraint are constraints reflected on difficulty of moving a train for a reason other than operation. In an unavoidable case, measures such as movement of a train out of operation are employed, but this needs engagement of crew or the like and is extremely high in cost.

Next, the work constraint will be described below. Each train needs to be subjected to depot work such as examination or cleaning, and the depot work is performed at a depot in many cases. Some examinations need to be performed within a period determined by law and while travel distance since the previous examination is within its upper limit. Some cleaning is performed in the period of several days to two weeks approximately. In addition, work such as interchange of vehicle advertisement is performed at a depot in many cases. A plan of depot work such as examination and cleaning is provided in advance. Thus, a train to be subjected to depot work needs to arrive in time at a depot where the depot work can be performed. This constraint is referred to as the work constraint.

Accordingly, a train allocation plan is a plan by which each operation is allocated to a train in a mutually exclusive and collectively exhaustive manner to satisfy the initial day constraint, the connection constraint, and the work constraint.

In the example illustrated in FIG. 2A, the initial day constraint is such that train 01F is at place B, train 02F is at place C, and train 03F is at place B before departure on the initial day. Each place is a station or a depot.

As for depot work, train 01F needs to be subjected to cleaning on 6/3 and train examination on 6/4 and train 02F needs to be subjected to train examination on 6/3 as illustrated in FIG. 2A. Specifically, the corresponding work constraint is as follows. For example, the train examination of train 01F is performed at place B in the daytime (between a morning operation and an afternoon operation), and thus operation 1-03 that is a whole-day operation, operation 1-02 by which the train cannot reach place B, and afternoon operation 1-04 the departure place of which is place A cannot be allocated on a weekday train examination day, but only operation 1-01 can be allocated. Furthermore, train 01F is subjected to train examination on a holiday, and accordingly, cannot be allocated to whole-day operations 2-01 and 2-02, and thus the day needs to be a reserve day. A reserve day indicates that no operation is allocated on the day. Allocation of no operation can be considered as allocation of a "one-day reserve operation".

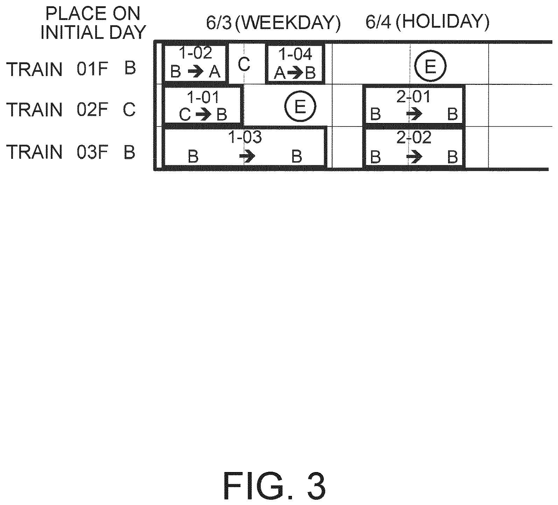

FIG. 3 illustrates an example of a train allocation plan produced under the above-described various constraints.

First of all, it can be understood that each operation is allocated to either train in a mutually exclusive and collectively exhaustive manner.

Next, it can be understood by checking the first operation of each train that the initial day constraint is satisfied since the departure place of the first operation of train 01F is B, the departure place of the first operation of train 02F is C, and the departure place of the first operation of train 03F is B.

Next, it can be understood by checking operations allocated to each train from left to right that the connection constraint is satisfied such that:

- Train 01F is allocated to operation 1-02 by which the train arrives at place A and then operation 1-04 by which the train departs from place A,
- Train 02F is allocated to operation 1-01 by which the train arrives at place B and then operation 2-01 by which the train departs from place B, and
- Train 03F is allocated to operation 1-03 by which the train arrives at place B and then operation 2-02 by which the train departs from place B.

In addition, it can be understood that the work constraint is satisfied because:

- Train 01F on 6/3 when cleaning is performed is allocated to operations 1-02 and 1-04 by which the train can stay at place A between a morning operation and an afternoon operation.
- Train 01F on 6/4 when train examination is performed is allocated to a one-day reserve operation by which the train stays at place B in the morning and the daytime.
- Train 02F on 6/3 when train examination is performed is allocated to operation 1-01 by which the train can stay at place B in the daytime between the morning and the afternoon.

It is assumed above that all operations are executed with the same number of vehicles and the number of vehicles of each train matches the number of vehicles necessary for an operation. In other words, one train is allocated to one operation in such one-to-one correspondence. However, the number of vehicles in reality is different among operations in some cases. In such a case, minimum trains (hereinafter referred to as small trains) need to be combined and allocated to an operation.

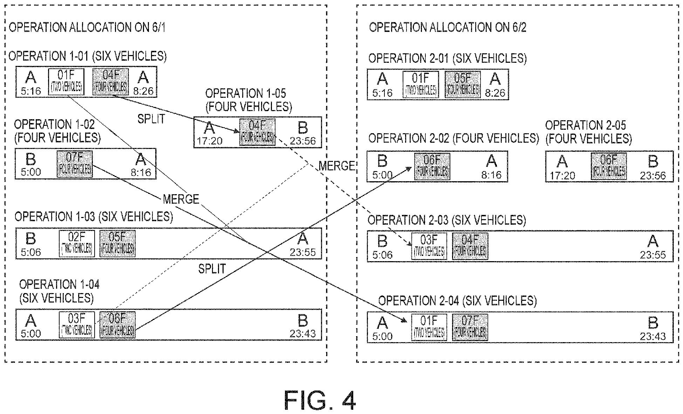

FIG. 4 illustrates an example of a train allocation plan including a plurality of operations among which the number of vehicles is different. In this example, a train allocation plan of seven small trains 01F to 07F on the two days of 6/1 and 6/2 is considered. Five operations 1-01 to 1-05 are on 6/1, and five operations 2-01 to 2-05 are on 6/2. Three small trains 01F to 03F are each a two-vehicle train, and four small trains 04F to 07F are each a four-vehicle train. Operations 1-02, 1-05, 2-02, and 2-05 are each a four-vehicle operation (the number of vehicles necessary for the operation is four), and the other operations are each a six-vehicle operation (the number of vehicles necessary for the operation is six).

In this case, a small train and an operation do not have one-to-one correspondence, and thus it is needed to combine one small train or two or more small trains so that the number of vehicles of the combination matches the number of vehicles of the operation and allocate the combined small trains to the operation. Note that, in this case as well, it is difficult to move a small train for a reason other than operation as in the example illustrated in FIG. 3, and thus the initial day constraint, the connection constraint, and the work constraint need to be satisfied for each small train.

Note that, even in a case where the connection constraint is satisfied for each small train, split (release) work of separating vehicles or merge (connection or addition) work of connecting vehicles is performed when train combination changes between a morning operation and an afternoon operation (or an operation on the previous day and an operation on the current day).

The following describes an example in which one small train or two or more small trains are combined and allocated to an operation. As illustrated in FIG. 4, small train 01F is allocated to operation 1-01 by which the train arrives at place A and then operation 2-04 by which the train departs from place A on the next day, and accordingly, satisfies the connection constraint. Similarly, any other small train satisfies the connection constraint. Thus, all small trains satisfy the connection constraint.

Operation 1-01 (six vehicles) in the morning on the first day is executed by small trains 01F and 04F connected to each other, but operation 1-05 (four vehicles) is executed by train 04F alone in the afternoon on the first day. Thus, split work of small trains 01F and 04F needs to be performed after arrival of operation 1-01 and before departure of operation 1-05.

Small train 01F is merged (connected) to small train 07F in operation 1-02 (four vehicles) in the morning on the first day and operated in operation 2-04 on the second day. Thus, merge work (connection work) of small trains 01F and 07F needs to be performed after end of operation 1-02 and before departure of operation 2-04.

In this manner, in a case where the number of vehicles (number of operation vehicles) necessary for execution of an operation is different among operations, a constraint (match constraint) that the number of vehicles (number of operation vehicles) necessary for an operation matches the total number of vehicles of one or more small trains allocated to the operation needs to be satisfied in addition to the initial day constraint, the connection constraint, and the work constraint of a train allocation plan. In this case, split work and merge work require cost and time, and thus a train allocation plan needs to be produced so that the split-merge cost is minimized. The split-merge cost is, for example, the number of times of split work, the number of times of merge work, or the total number of times (split-merge iteration number) of split work and merge work.

A plan production device configured to produce such a train allocation plan will be described below in detail.

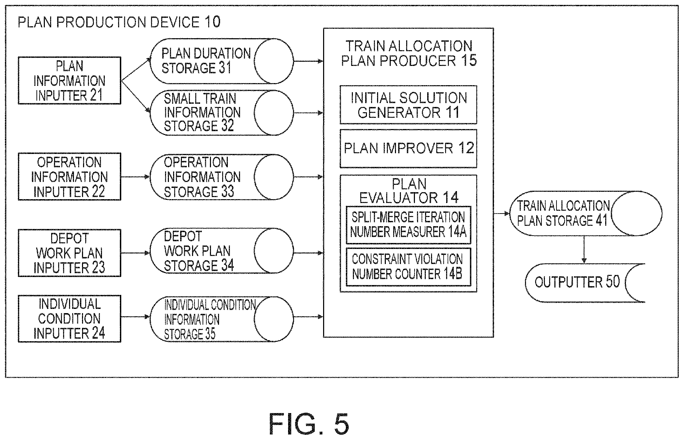

FIG. 5 is a block diagram illustrating an example of a plan production device 10 according to the present approach. The plan production device 10 includes a plan information inputter 21, an operation information inputter 22, a depot work plan inputter 23, an individual condition inputter 24, a train allocation plan producer 15, an outputter 50, and various storages 31 to 35 and 41. The train allocation plan producer 15 corresponds to a processing unit or a processing circuitry configured to produce an operation plan (train allocation plan) according to the present approach. The following describes the outline of the present device 10 and then describes each component in detail.

The plan information inputter 21 acquires plan duration information and small train information as input information and stores the plan duration information and the small train information in the plan duration storage 31 and the small train information storage 32, respectively. The plan duration information and the small train information that are stored in the plan duration storage 31 and the small train information storage 32 are referred to as plan duration information 31 and small train information 32 by using the same reference signs as those of the plan duration storage 31 and the small train information storage 32.

The operation information inputter 22 acquires operation information as input information and stores the operation information in the operation information storage 33. The operation information stored in the operation information storage 33 is referred to as operation information 33 by using the same reference sign as that of the operation information storage 33.

The depot work plan inputter 23 acquires a depot work plan (plan information on work such as examination and cleaning) of each small train as input information and stores the depot work plan in the depot work plan storage 34. The depot work plan stored in the depot work plan storage 34 is referred to as a depot work plan 34 by using the same reference sign as that of the depot work plan storage 34.

The individual condition inputter 24 acquires individual condition information as input information and stores the individual condition information in the individual condition information storage 35. The individual condition information stored in the individual condition information storage 35 is referred to as individual condition information 35 by using the same reference sign as that of the individual condition information storage 35.

The train allocation plan producer 15 produces a train allocation plan based on the plan duration information 31, the small train information 32, the operation information 33, and the depot work plan 34 (examination-cleaning work information) of each small train, the individual condition information 35 and stores the train allocation plan in the train allocation plan storage 41. However, the train allocation plan may be produced based on the plan duration information 31, the small train information 32, and the operation information 33 without using the depot work plan 34 and the individual condition information 35. The train allocation plan stored in the train allocation plan storage 41 is referred to as a train allocation plan 41 by using the same reference sign as that of the train allocation plan storage 41.

The outputter 50 reads the train allocation plan 41 from the train allocation plan storage 41 and outputs the train allocation plan 41 to a user in a visually recognizable manner. The outputter 50 is, for example, a display and displays the train allocation plan 41 on a screen.

The plan information inputter 21, the depot work plan inputter 23, the individual condition inputter 24, and the train allocation plan producer 15 may be each an optional operation device such as a keyboard, a mouse, or a touch panel, which can be operated by the user. In this case, each component acquires the corresponding input information based on an input from the user. Alternatively, each component may be a communicator configured to receive information from the outside. A communicator common to each component may be provided. The outputter 50 may be a communicator configured to transmit information to an external device such as a user terminal or may be a printer or the like instead of the above-described display. At least one of the depot work plan inputter 23 or the individual condition inputter 24 may be omitted.

The train allocation plan producer 15 includes an initial solution generator 11, a plan improver 12, and a plan evaluator 14. The initial solution generator 11 has a function to produce an initial solution candidate, and the plan improver 12 has a function to improve a solution candidate. The plan evaluator 14 has a function to evaluate the appropriateness of a solution (for example, a function to evaluate an evaluation value of the solution). The train allocation plan producer 15 may also have a function (vehicle number condition determiner) to determine whether the number of vehicles of an operation matches the total number of vehicles of small trains allocated to the operation. The train allocation plan producer 15 produces a train allocation plan from input information by using these functions.

The present device 10 will be described further in detail below.

Plan duration information 31

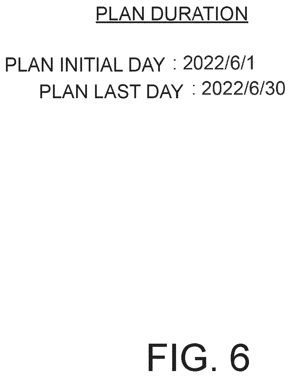

FIG. 6 illustrates an example of the plan duration information 31. The plan duration information 31 includes information on a plan initial day and a plan final day of a plan target duration. In the example illustrated in the diagram, 30 days (duration) from 2022/6/1 to 2022/6/30 are set. The train allocation plan producer 15 produces, in accordance with this information, a train allocation plan for each day (duration) from the plan initial day to the plan final day. Weekday-holiday classification information indicating whether each day is a weekday or a holiday may be included as additional information.

Small train information 32

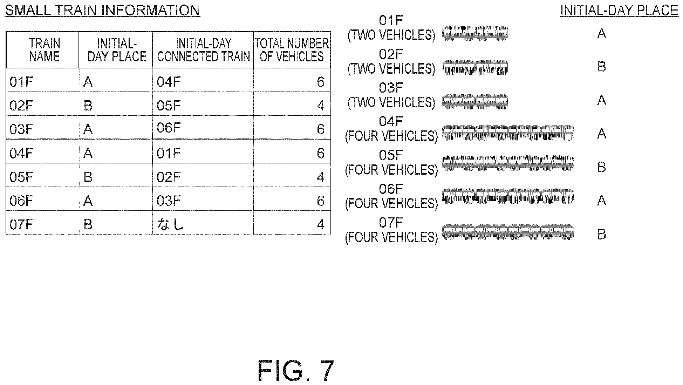

FIG. 7 illustrates an example of the small train information 32. The small train information 32 is an example of train information including the number of vehicles of each of a plurality of small trains that can be merged or split between two or more trains (in this example, small trains). The small train information 32 includes the number of vehicles of each small train (right diagram). The small train information 32 includes a table storing, for each small train, a train name (the name of the small train), an initial day place, an initial day connected train (connection target small train on the initial day), and a total number of vehicles of the initial day connected train (left diagram). The table indicates that, for a small train on the first row, for example, the train name is 01F, the initial day place indicating a place before departure on the initial day is A, the connection target small train (initial day connected train) before departure on the initial day is 04F, and the total number of vehicles of trains 01F and 04F is six. This is referred to as connected train 01F-04F (six vehicles). The other initial day connected trains are connected train 02F-05F (six vehicles) and connected train 03F-06F (six vehicles).

The order of small trains in a connected train may be included in the small train information 32. In this case, a column indicating the position of each small train such as whether the small train is a leading or last vehicle may be added in addition to information on the connected train. In a case where three or more small trains are connected, the names of a plurality of small trains may be stored in the column of initial day connected train. In this case, only the name of a small train connected after the own small train may be stored, the names of two trains before and after the own small train may be stored, and the position (rank) of the own small train may be stored. Alternatively, the names of all small trains connected as a whole may be stored, and in this case, information indicating the order of each small train may be additionally stored. In the case, the description order of the names of small trains may express the order of the small trains.

Operation information 33

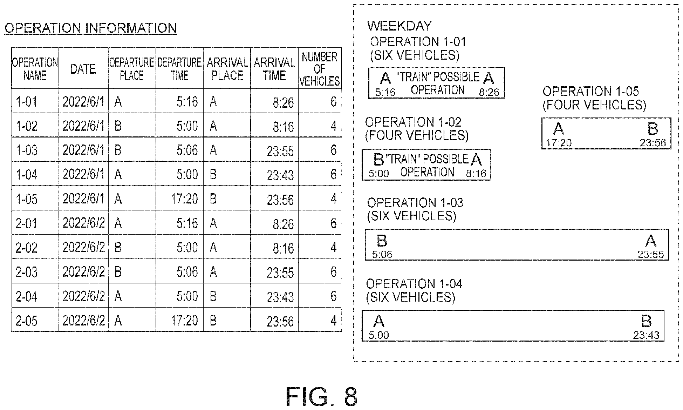

FIG. 8 illustrates an example of the operation information 33. The operation information 33 includes information on a plurality of operations, each information including an operation duration, and information on the number of vehicles necessary for execution of each of the plurality of operations. More specifically, as illustrated in the left table, the operation information 33 includes at least information on an operation name, a date, a departure place, a departure time, an arrival place, an arrival time, and the number of vehicles. The operation name is an example of identification information that identifies an operation. The duration from the departure time to the arrival time corresponds to the operation duration.

An operation pattern is substantially same for each day property such as weekday, Saturday, or Sunday, and thus in the left table in FIG. 8, contents are the same except for the date since 6/1 and 6/2 are weekdays. An operation pattern may be defined for each timetable of a weekday, Saturday, a holiday (or holiday as collection of Saturday and a holiday), or the like, each day may have a property such as weekday or holiday, and an operation pattern of the property corresponding to each day may be input. An exemplary weekday operation pattern is illustrated in the right diagram in FIG. 8. The number of vehicles for each operation is set in advance. The operation pattern of each day property may be included in the operation information 33. In the right diagram, ""train" possible operation" means that train examination is possible (train arrives in time for train examination) even when the operation is allocated. This operation may be referred to as a train examination possible operation.

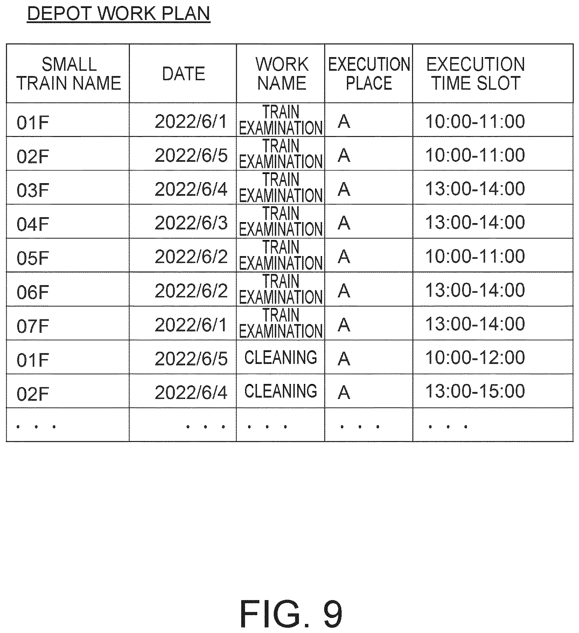

FIG. 9 illustrates an example of the depot work plan 34 (for example, examination-cleaning work information) of each small train. The depot work plan 34 is information including work to be performed on a plurality of trains (in this example, small trains) and a time slot in which the work is to be performed. More specifically, the depot work plan 34 includes a small train name, a date, information on a work name, a work place, and a work time slot.

The first row in FIG. 9 indicates that train examination is performed (scheduled) on June 1, 2022 at place A in a time slot of 10:00 to 11:00. In a case where settings of a work place and a work time slot are available as in this example, an operation by which small train 01F can be present at the work place in the work time slot is allocatable to the small train on the day. In a case where no settings of a work place and a work time slot are available, an operation that is allocatable to the corresponding work may be determined by another method.

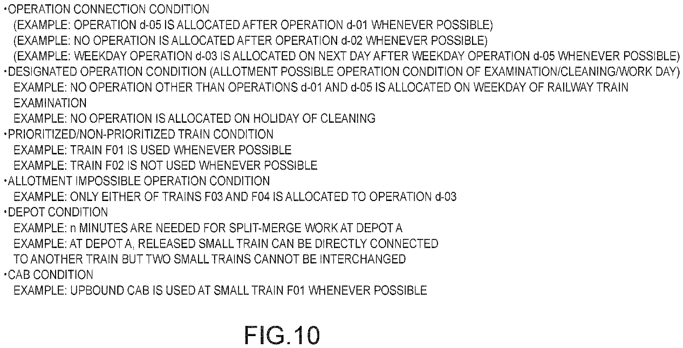

FIG. 10 illustrates an example of the individual condition information 35. The individual condition information 35 is a condition other than input information (the plan information, the operation information, and the depot work plan) described so far. As illustrated in FIG. 10, the individual condition information 35 is as follows. Brief description thereof is provided below, whereas detailed description will be provided in a fourth approach.

Operation connection condition

Example: operation d-05 is allocated after operation d-01 whenever possible.
Example: no operation is allocated after operation d-02 whenever possible.
Example: weekday operation d-03 is allocated on the next day after weekday operation d-05 whenever possible.

Designated operation condition (allotment possible operation condition of examination/cleaning/work day)

Example: no operation other than operations d-01 and d-05 is allocated on a weekday of train examination.
Example: no operation is allocated on a holiday of cleaning.

Prioritized/non-prioritized train condition

Example: train F01 is used actively.
Example: train F02 is not used whenever possible.

Allotment impossible operation condition

Example: only either of trains F03 and F04 is allocated to operation d-03.

Depot condition (time taken for split-merge work, FIFO condition)

Example: n minutes are needed for split-merge work at depot A (separate work times may be defined for split and merge).
Example: at depot A, a released small train can be directly connected to another train but two small trains cannot be interchanged.

Cab condition

Example: an upbound cab is used at small train F01 whenever possible. In a case where cabs of a small train, which can be provided at the leading vehicle and the last vehicle of the small train, are provided at both vehicles, the vehicles are distinguished from each other for convenience sake by referring to a cab provided at the leading vehicle in upbound travel as an "upbound cab" and a cab provided at the leading vehicle in downbound travel as a "downbound cab". Since a small train is normally not inverted in an operation nor at a depot, the distinction is possible with these names, but other names may be used in a case where the inversion is possible.

Other conditions

For example, a condition that split and merge are possible at depot A but are impossible at depot B may be defined. Conditions other than those listed above may be defined.

The train allocation plan producer 15 performs problem setting based on input information (the plan information, the operation information, the depot work plan, and the individual condition information) as described above. A specific example of the problem setting will be described below.

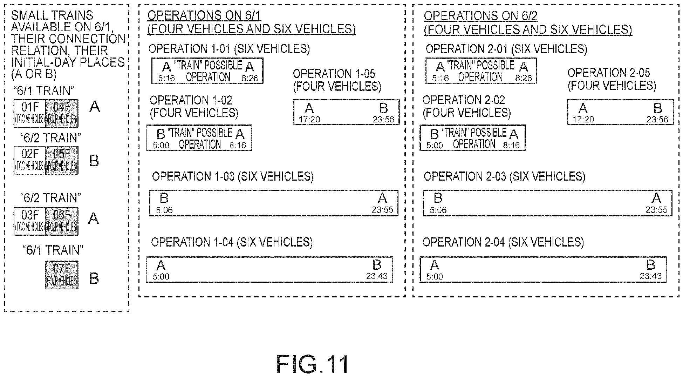

FIG. 11 illustrates a specific example of a problem that is set based on the input information.

First, a duration for which an operation plan is to be obtained and plan target small trains are determined as plan information 21 based on the plan duration information 31 in FIG. 6 and the small train information 32 in FIG. 7. In this case, the duration is 6/1 to 6/2 (FIG. 6) and the small trains are seven trains 01F to 07F (FIG. 7). According to the small train information 32 (FIG. 7), as illustrated on the left side in FIG. 11, the small trains before departure on the initial day are as follows.

- 01F and 04F are connected and located at place A
- 02F and 05F are connected and located at place B
- 03F and 06F are connected and located at place A
- 07F is located at place B alone

According to the operation information 33 (FIG. 8), five operations 1-01, 1-02, 1-03, 1-04, and 1-05 are planned on 6/1 as illustrated at the center of FIG. 11. It is also understood that five operations 2-01, 2-02, 2-03, 2-04, and 2-05 are planned on 6/2 as illustrated on the right side of FIG. 11. The number of vehicles necessary for each operation is illustrated in parentheses.

In addition, according to the depot work plan 34 (FIG. 9), it is understood that train examinations of small trains 01F (6/1), 05F (6/2), 06F (6/2), and 07F (6/1) is performed on their corresponding dates. It is also understood based on the work place and work time slot of each train examination that either of operations 1-01, 1-02, 2-01, and 2-02 is allocatable on a train examination day. Operations 1-05 and 2-05 are allocatable as well when an operation is executable after a train examination.

Thus, small train 01F needs to be operated in either of morning operations 1-01 and 1-02 on the initial day to perform a train examination on 6/1.

Under the above-described conditions, a problem is set that combination of small trains is allocated so that the initial day constraint, the connection constraint, and the work constraint, and the vehicle number constraint are satisfied and the split-merge cost is minimized.

In a case where the operation patterns on 6/1 and 6/2 are repeated in the future, a train allocation plan without split nor merge can be easily produced as follows, for example, if there is no work constraint.

- Six-vehicle operations 1-01, 2-01, 3-01, ... are allocated to small trains 01F (two vehicles) and 04F (four vehicles)
- Four-vehicle operations 1-02, 1-05, and 2-02, 2-05, 3-02, ... are allocated to 07F (four vehicles)
- Six-vehicles operations 1-03, 2-04, 3-03, 4-04, ... are alternately allocated to small trains 02F (two vehicles) and 05F (four vehicles)
- Six-vehicle operations 1-04, 2-03, and 3-04, 4-03... are alternately allocated to small trains 03F (two vehicles) and 06F (four vehicles)

However, split and merge are needed in some cases where only one of combined small trains needs to receive a train examination. For example, consider a case where 01F and 06F need to receive train examinations on 6/1 in the problem setting in FIG. 11 (the train examination of small train 06F on 6/1 is not described in the depot work plan in FIG. 9). In this case, among operations departing from place A in the morning on 6/1, only operation 1-01 can return to place A of a train examination in the morning, and thus it is needed to recombine small-train combinations 01F-04F and 03F-06F into small-train combinations 01-06F and 03-04F and then allocate small-train combination 01-06 to operation 1-01. This is clearly a case in which split and merge are needed. In a case where combination of the numbers of vehicles is different between arrival and departure at a depot when operation patterns on a certain day and the next day are compared, split and merge are needed in some cases. For example, in a case where only one operation the number of vehicles of which is four is inbound to place (A) on a day (6/1) but two operations the number of vehicles of each of which is two are outbound on 6/2, vehicles need to be split by the next day after the inbound operation on 6/1.

The train allocation plan producer 15 obtains a solution by solving the problem that is set as described above, thereby generating train allocation plan information 41. Specifically, an operation plan is produced by allocating, to each of a plurality of operations, one or more trains (in this example, small trains) the total number of vehicles of which matches the number of vehicles necessary for the operation. In this case, although merge work of merging two or more trains is needed to allocate the two or more trains to an operation and split work of splitting two or more trains is needed to allocate the two or more trains merged by the merge work to separate operations, the train allocation plan producer 15 produces an operation plan based on at least one of a merge iteration number that is the number of times that merge work is performed or a split iteration number that is the number of times that split work is performed. For example, the operation plan is produced such that at least one of the merge iteration number or the split iteration number is minimized or reduced to a threshold value or smaller. Alternatively, the operation plan is produced by minimizing the sum of the merge iteration number and the split iteration number or reducing the sum to a threshold value or smaller. The train allocation plan information 41 will be described below first, and then operation of the train allocation plan producer 15 will be described later in detail.

Details of train allocation plan information 41

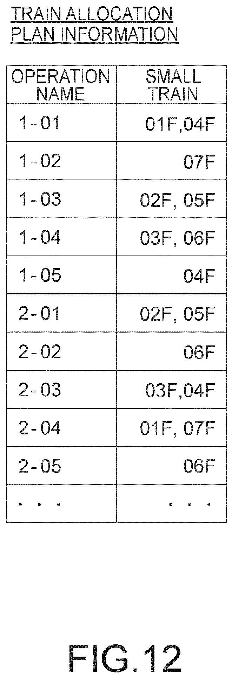

FIG. 12 illustrates an example of the train allocation plan information 41 generated by the train allocation plan producer 15. The train allocation plan information 41 is an operation plan in which each operation is associated with one or more trains (in this example, small trains) in a plan duration. In this case, columns of the number of vehicles of each operation and the number of vehicles of each small train may be added as additional information.

Operation of the train allocation plan producer 15 will be described below in detail.

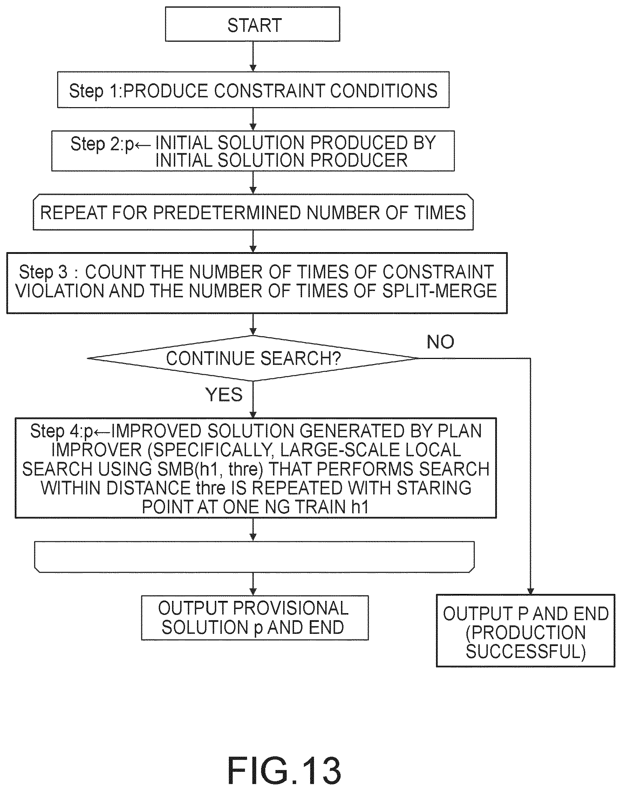

FIG. 13 is a flowchart illustrating an example of the procedure of producing a train allocation plan as a simulation procedure at the train allocation plan producer 15. The outline of the present procedure will be described below.

At Step 1, the train allocation plan producer 15 performs production of small operations by splitting an operation and problem setting (constraint condition production) based on the small operations. The problem setting is the same as in FIG. 11, but small operations are included as allocated operations.

At Step 2, the train allocation plan producer 15 produces an initial solution p by using the initial solution generator 11 under constraint conditions.

Then, Steps 3 to 4 are repeated

At Step 3, the train allocation plan producer 15 counts a split-merge iteration number and the number of times of constraint violation by using the plan evaluator 14. The plan evaluator 14 includes a split-merge iteration number measurer 14A configured to count the split-merge iteration number and a constraint violation number counter 14B configured to count the number of times of constraint violation. The process proceeds to Step 4 in a case where a solution has room for improvement. Otherwise, a solution p is output and the process ends.

At Step 4, the train allocation plan producer 15 generates an improved solution by the plan improver 12 and sets the improved solution as p, and the process returns to Step 3.

Details of each step will be described below by using the case of FIG. 11.

Details of Step 1

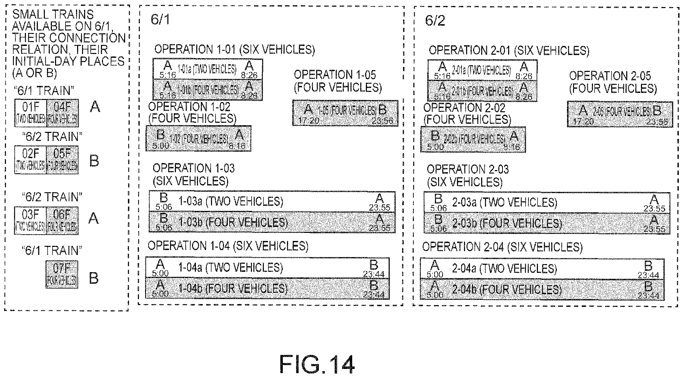

FIG. 14 is a diagram for description of details of Step 1. FIG. 14 illustrates an example in which an operation is split into a minimum pattern (small operations).

Step 1 mainly performs processing of producing a problem from input information. The present processing performs small operation production processing in addition to the problem setting processing described above with reference to FIG. 11. The same description as with FIG. 11 is omitted and the small operation production processing will be described below.

Small operation production is processing of splitting an operation into small units each corresponding to a small train in a one-to-one relation. The small units are referred to as small operations. An operation from which a small operation is originated is referred to as an original operation. An operation that is not split is referred to as a lone operation. In a case where an operation is split into a small operation a and a small operation b, the small operation a and the small operation b are referred to as paired operations.

In the example illustrated in FIG. 14, operations 1-01, 1-03, and 1-04 are each split into a two-vehicle small operation and a four-vehicle small operation. Operation 1-01 (six vehicles) is split into, for example, operation 1-01a (two vehicles) and operation 1-01b (four vehicles). These split operations, which are originated from the same operation, have the same properties of departure place, departure time, arrival place, and arrival time, but information on the number of vehicles is different. Through the splitting, a train (small train) and an operation (small operation) correspond to each other in a one-to-one relation.

This splitting scheme may be input by the user in a case where the splitting scheme is determined. In this example, it is understood that, on the first day, for example, all small trains need to be used to operate all operations 1-01 to 1-04 and at least one four-vehicle small train needs to be used for each of operations 1-01 to 1-04, and it can be indicated that only this splitting method is available. Thus, mathematically calculating such a solution for each day may be employed.

However, the splitting scheme has freedom as described later in some cases, and an approach in such a case will be described in the fourth approach.

The train allocation plan producer 15 performs, based on the produced small operations and lone operations, setting of the same problem setting as in FIG. 11 that small operations (including lone operations) are allocated to small trains. More specifically, a problem that one small train or two or more small trains that match each small operation (including a lone operation) in the number of vehicles need to be allocated is set, and information on a plurality of small trains that can be used for allocation to operations in this case, contents determined in the depot work plan and the individual condition information 35, and the like are set as constraint conditions. Hereinafter, a case where the individual condition information 35 is not input is assumed for simplification.

Details of Step 2

At Step 2, an initial solution of the problem of allocating small operations to small trains is produced. In this example, a solution that satisfies the initial day constraint and the connection constraint is obtained as the initial solution.

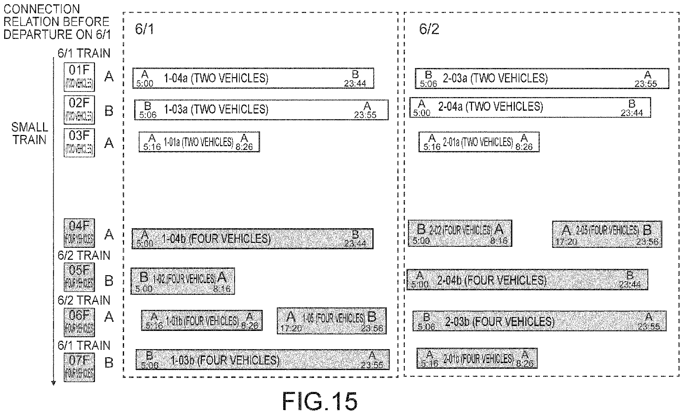

FIG. 15 illustrates an example of the initial solution production. The initial solution is produced for each of two-vehicle and four-vehicle. In this example, the allocation problem is already a problem for each number of vehicles and can be independently solved for each number of vehicles. To solve the problem for each number of vehicles, for example, a greedy algorithm of allocating operations to allocatable trains in ascending chronological order of departure time for each day (duration), as disclosed in Japanese Patent No. 5075577, may be employed.

In this example, consider a case where the problem is first split into two-vehicle and four-vehicle problems as in FIG. 15 and small operations are allocated to small trains thereof. For example, in the case of the two-vehicle problem on 6/1, since the chronological order of departure time is 1-04a, 1-03a, 1-01a, allocation is performed in the order (in a case where there are a plurality of possible small trains, allocation is performed to the first train). In a case where there are a plurality of allocatable small trains, allocation to small trains is performed in descending order of priority rank. In the example illustrated in FIG. 15, the priority rank is higher on the upper side along the axis of small train. In the present example, 1-04a, 1-03a, and 1-01a are allocated to 01F 02F, and 03F, respectively, when an initial day condition is considered. As for the four-vehicle problem, the chronological order of departure time is 1-04b, 1-02, 1-03b, 1-01b, 1-05, and in a case where these operations are allocated to small trains, the operations are allocated to 04F, 05F, 07F, 06F, and 05F, respectively (small train 05F is allocated to both morning operation 1-02 and afternoon operation 1-05).

Details of Step 3

Subsequently at Step 3, the number of times of violation of the work constraint and the number of times of split-merge work are counted and acquired as evaluation values. The initial day constraint and the connection constraint are satisfied at Step 2.

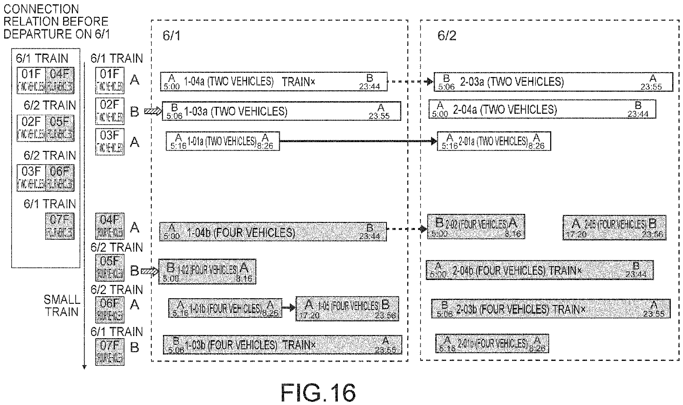

FIG. 16 illustrates an example of the constraint violation determination at Step 3.

First, as for the work constraint, it may be determined (day, small train) for which depot work is set whether a small operation allocated to the day is possible with the work as in FIG. 16. For example, small train 01F on 6/1 needs to receive a train examination, but a small operation actually allocated to small train 01F is whole-day operation 1-04a. Thus, it can be determined that the train examination of small train 01F cannot be performed and the work constraint is not satisfied. In the diagram, "train ×" means that a train examination cannot be performed.

As for split and merge, for example, 01F and 04F allocated to operations 1-04a and 1-04b, respectively, which are originally the same operation, are merged and operated on 6/1 but are allocated to different original operations, respectively, on 6/2 (small train 01F is allocated to operation 2-03a, and small train 04F is allocated to operation 2-02). Thus, it is understood that split-merge work of small trains 01F and 04F is needed between return to a depot on 6/1 and departure on 6/2 (split small train 01F is merged with small train 06F, and split 04F is merged with no small train and becomes a lone small train). Each line with a horizontal arrow in the diagram means that train split is performed for lines of the same kind. For example, each hatched arrow means that small trains 02F and 05F in a connected state before departure on 6/1 are split and merged before start of the initial day (split small train 02F is merged with small train 07F, and split 05F is merged with no small train and becomes a lone small train).

Three cases below may be determined as a method of determining whether split-merge is performed based on small operations allocated in ascending chronological order for each train. In any of cases 1 to 3 described below, it is determined that split-merge (at least one of split or merge) is performed.

Case 1: a small train allocated to a lone operation is allocated to a small operation next.
Case 2: a small train allocated to a small operation is allocated with a small operation combined with another small train next.
Case 3: a small train allocated to a small operation is allocated to a lone operation next.

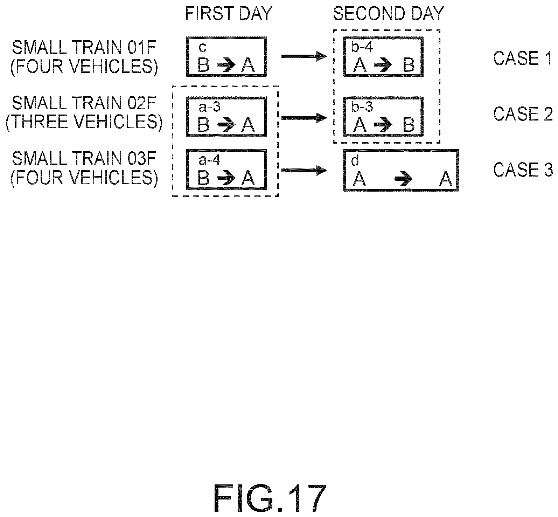

FIG. 17 illustrates a specific example of split-merge determination.

In this example, the following is assumed as a premise on the first day.

- Operation "a" (seven-vehicle operation) is split into small operations a-3 (three vehicles) and a-4 (four vehicles).
- Operation "b" (seven-vehicle operation) is split into small operations b-3 (three vehicles) and b-4 (four vehicles).
- Operations "c" and "d" are each a four-vehicle operation (lone operation).

On the above-described premise, a case where small train 01F allocated to operation "c" on the first day is allocated to small operation b-4 on the second day corresponds to the above-described case 1.

- A case where small train 02F allocated to operation a-3 on the first day is allocated to small operation b-3 on the second day corresponds to the above-described case 2.
- A case where small train 03F allocated to small operation a-4 on the first day is allocated to small operation d on the second day corresponds to the above-described case 3.

When the determination method as described above is used, the split-merge iteration number can be calculated for each train (although doubly counted). The doubly counting in the above-described example means that two counts occur at merge of small train 01F on the second day and merge of small train 02F on the second day, but only one is counted in reality because small trains 01F and 02F are merged.

A function that obtains a constraint violation degree (evaluation value) by the sum of the numbers of times of violation of the above-described various constraints and the split-merge cost (split-merge iteration number) is defined as an evaluation function. A solution (initial solution or improved solution to be described later) of the above-described problem can be evaluated by calculating the evaluation value for the solution based on the evaluation function. The evaluation function may be, for example, a function of the split-merge cost only. In the present approach, the weights of the number of times of violation and the split-merge iteration number are equal, but the weights may be replaced. For example, a weight $w1$ of constraint violation and a weight $w2$ of the split-merge iteration number may be introduced and the evaluation value may be calculated by the number of times of constraint violation $\times w1 +$ the split-merge iteration number $\times w2$. Moreover, the weights of the split iteration number and the merge iteration number are equal, but the weights may be replaced. In a case where the calculated evaluation value is zero or equal to or smaller than a threshold value, the solution is output and processing is ended. In a case where the evaluation value is larger than zero or larger than the threshold value, the process proceeds to Step 4.

Details of Step 4

An example in which, at Step 4, the train allocation plan producer 15 generates an improved solution by using the plan improver 12 will be described below.

To generate an improved solution, for example, a back-truck search method using path exchange as disclosed in Japanese Patent No. 5075577 may be used.

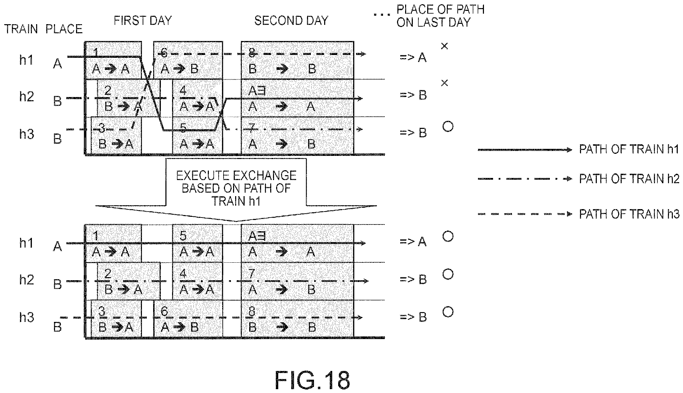

FIG. 18 is an explanatory diagram of the back-truck search method using path exchange. The upper diagram corresponds to an initial solution, and the lower diagram corresponds to an improved solution obtained by applying the back-truck search method. A case for description is used in FIG. 18, and the present case is different from the case of the present approach described above.

An upper-left number in each rectangle represents an operation name, and "A 写" means a reserve operation. Trains h1 to h3 are initially present at places A, B, and B as illustrated and need to return to their initial places on the final day (to perform depot work, for example). Three kinds of arrows in the diagrams each indicate a path representing the order of operations allocated to the corresponding train. For example, train h1 is allocated to operation 1, operation 5, and operation A 写. As understood from the upper diagram, train h1 departs from place A and stays at place B on the final day, which is constraint violation, train h3 departs from place B and stays at place A on the final day, which is constraint violation, and train h2 departs from place B and stays at place B on the final day, which is not constraint violation. Accordingly, the number of times of constraint violation is two. Since no split nor merge is performed, the split-merge iteration number is zero. The evaluation value is 2 +0 = 2.

The back-truck search method using path exchange is applied to the initial solution in the upper diagram. This method is processing that searches for, by exchange calculation, a path along which the number of times of exchange is K or less and that resolves constraint violation of one (for example, train h1) of trains (referred to as NG trains) to which constraint violation or split-merge occurs, generates a solution based on the path, outputs the generated solution if the solution is an improved solution, and ends. The improved solution is a solution for which the value (evaluation value) of the evaluation function defined for the solution is smaller than that of the original solution. In the present example, a solution for which the number of times of constraint violation and the split-merge iteration number are both zero (the evaluation value is zero) is obtained as illustrated in the lower diagram, and the evaluation value is improved as compared to that before exchange. Thus, this solution is an improved solution.

An example in which the back-truck search method using path exchange is applied to the above-described case of the present approach will be specifically described below.

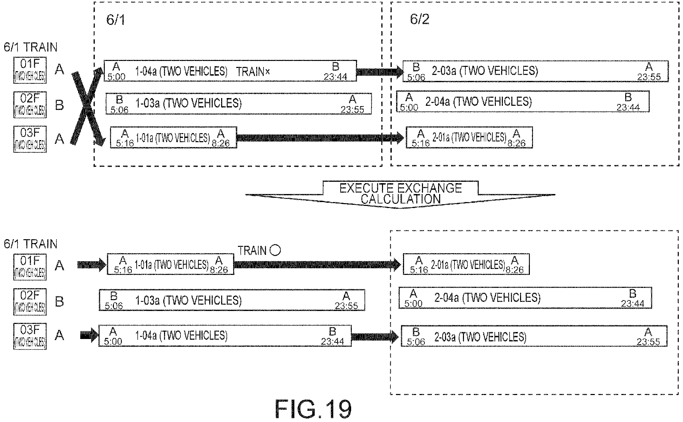

FIG. 19 illustrates an example of exchange calculation. The exchange calculation is processing of interchanging plans (operations) of two small trains at a certain time point or later as illustrated in FIG. 19. For example, in FIG. 19, the plan of the first and subsequent operations of small train 01F and the plan of the first and subsequent operations of small train 03F are interchanged. With this exchange calculation, constraint violation at the time point of interchange through exchange or later can be potentially resolved. For example, in the case of FIG. 19, work constraint violation of small train 01F on 6/1 has been resolved.

Although the exchange calculation is performed once in the example illustrated in FIG. 19, the exchange calculation may be continuously executed a plurality of times.

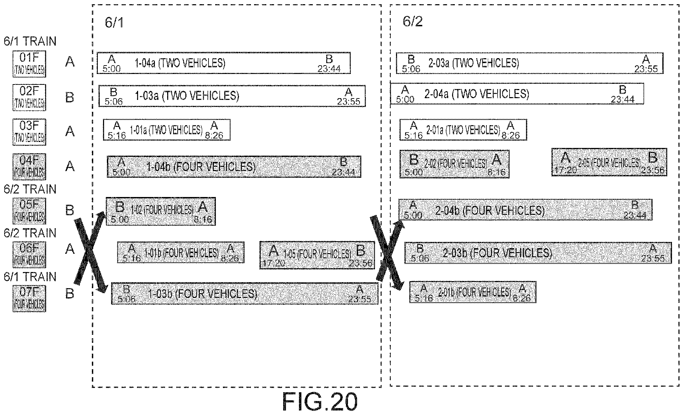

FIG. 20 illustrates an example of two times of the exchange calculation. FIG. 20 illustrates a case where exchange is performed two times when small train 05F is an NG train. First, the plan of the first and subsequent operations of small train 05F and the plan of the first and subsequent operations of small train 07F are interchanged, and then, the operation plan of small train 05F and the operation plan of small train 07F on 6/2 or later are interchanged.

Note that no connection constraint violation nor initial day constraint violation newly occurs when the exchange calculation is performed so that the connection constraint of interchanged parts is satisfied. Thus, an improved solution (solution with which the number of times of constraint violation and the split-merge iteration number are small) is expected to be obtained by exhaustively searching a plan change candidate (solution candidate) in the range of the upper limit value K of the number of times of exchange.

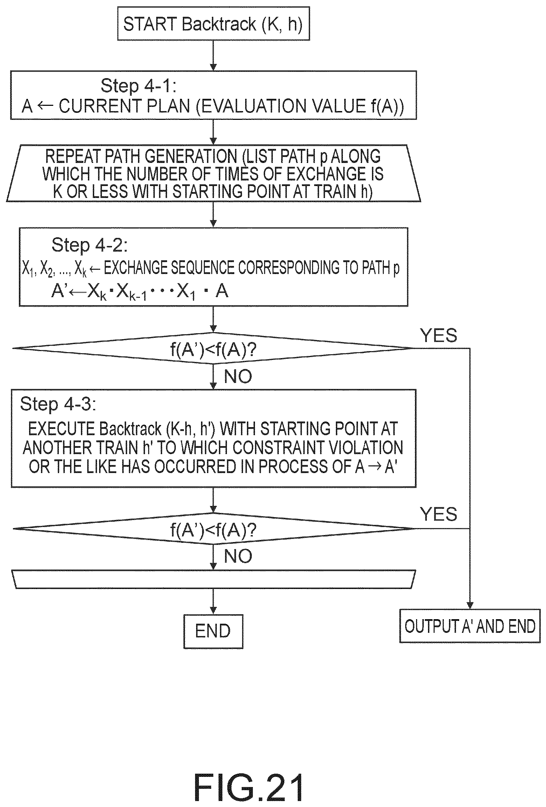

FIG. 21 is a flowchart of improved solution search based on K times of path exchange. The K times of exchange can be reduced to a path search problem on a network in which the probability of connection among a starting point node representing the starting point of each train and nodes each representing an operation is expressed by an arc, and search can be efficiently performed. At Step 4-1, the current train allocation plan is set as A, and the evaluation value of the train allocation plan A is set as f(A). Exhaustive generation of a path (path p) for which the number of times of exchange is K or smaller with a starting point at one NG train (train h) is repeated. At Step 4-2, the path p is reflected on the train allocation plan A (in the block, "Xk·Xk-1 ... X1·A" schematically expresses sequential exchange of operations in the plan A in accordance with the path p, and "X1, X2, ..., Xk" schematically expresses a plan after exchange). Whether the evaluation value of the train allocation plan on which the new path is reflected is reduced is determined. In a case where the evaluation value is reduced, the train allocation plan is output as a solution. In a case of no improvement, the procedure in FIG. 21 is recursively repeated with a starting point at another train (h') to which constraint violation or split-merge has occurred in the process of the exchange calculation and with the upper limit value of exchange changed to a value "K-k" obtained by subtracting the number k of times of exchange so far from K. In a case where constraint violation and split-merge both have occurred, processing is advanced to resolve prioritized one of constraint violation and split-merge, which is determined in advance. For example, in a case where at least one constraint violation has occurred, resolution of the constraint violation may be prioritized irrespective of the split-merge iteration number. When the evaluation value is reduced, the train allocation plan obtained at Step 4-3 is output as a solution. In this manner, a solution (allocation pattern of trains to operations) with which the evaluation value is minimized or reduced to a threshold value or smaller is detected by recursively performing calculation of the evaluation value with a plurality of trains sequentially allocated in descending order of priority rank to a plurality of operations in ascending chronological order of the departure times of the operations and exchange of allocations of the allocated trains to operations based on the evaluation value. An operation plan is obtained based on the detected allocation pattern. Further detailed description of the algorithm is provided in Japanese Patent No. 5075577 and thus omitted here.

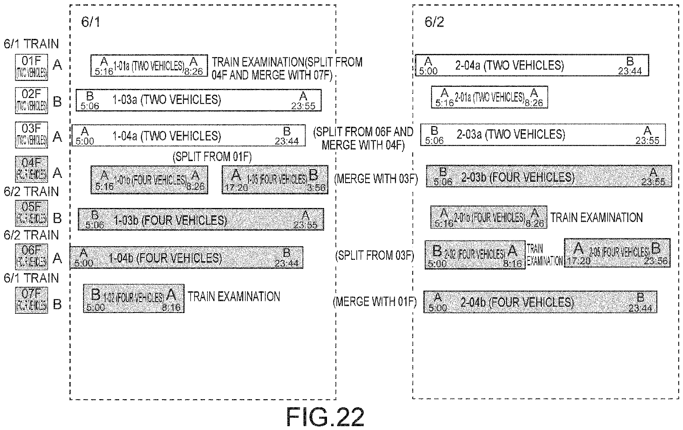

FIG. 22 illustrates an example of a solution produced by the train allocation plan producer 15 in the case of the problem setting in FIG. 11. The contents of split and merge are described in parentheses. For example, small train 04F is split from small train 01F between small operation 1-01b and operation 1-05. Small train 01F is split and merged with small train 07F after small operation 1-01a. In addition, "train examination" indicates that a train examination is performed at the position of "train examination". The initial day constraint and the connection constraint are satisfied for each small train. On a railway train plan scheduled day, a possible operation is allocated and the work constraint is satisfied. In addition, the split iteration number is two (four in a case where the split iteration number is counted for each small train) and the merge iteration number is two (four in a case where the merge iteration number is counted for each small train), and these split and merge iteration numbers correspond to a minimum solution.

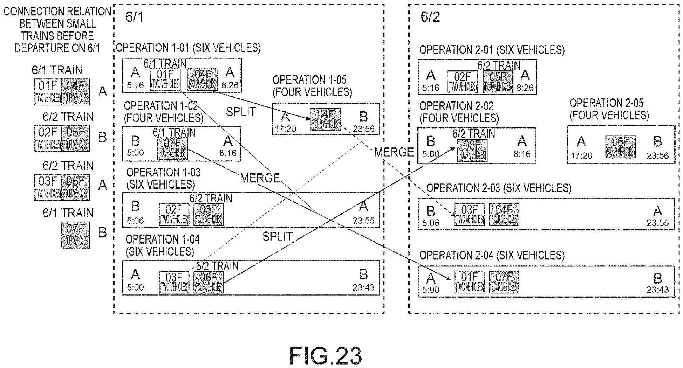

FIG. 23 illustrates an example in which the solution is expressed in an expression different from that in FIG. 22. Although the solution is expressed in the units of small operations in FIG. 22, the solution is expressed in the original units of operations in FIG. 23. It is understood from FIG. 23 that split of train 01F-04F and merge of small train 01F-07F need to be performed after the afternoon on the first day and split of train 03F-06F and merge work of 03F-04F need to be performed after night on the first day.

As described above, according to the present approach, it is possible to automatically produce a practically useful train allocation plan with which the number of vehicles necessary for an operation matches the total number of vehicles of one or more trains allocated to the operation and the split-merge iteration number is minimized.


Second approach


Description of the second approach will be made on a case that is based on the same problem (FIG. 11) as in the first approach but in which the individual condition information 35 includes a condition that split-merge is possible at depot A but not possible at depot B.

In this case, the method of calculating a solution is the same as in the first approach, but a different solution is obtained.

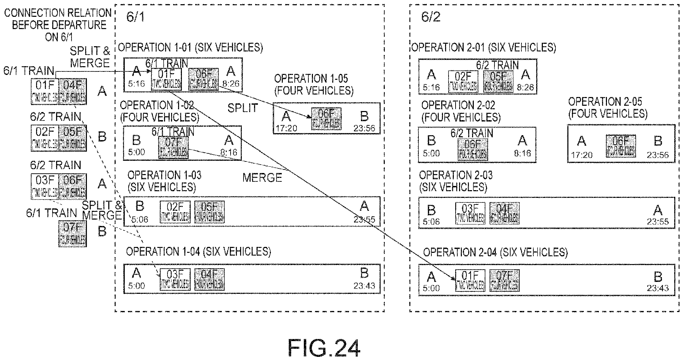

FIG. 24 illustrates an example of the solution obtained in the second approach. In this example, split is performed three times and merge is performed three times (the split-merge iteration number is six).

In this manner, according to the present approach, it is possible to obtain a train allocation plan with which the split-merge iteration number is minimized with consideration of characteristics of each depot.

Third approach

In the first and second approaches, a solution (train allocation plan) is calculated by using a search-based method of listing exchange paths. In the third approach, a solution (train allocation plan) is calculated by using a method based on mathematical modeling.

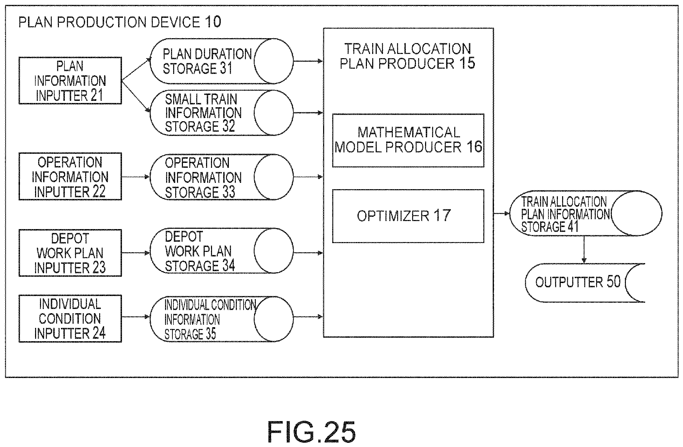

FIG. 25 is a block diagram illustrating an example of a plan production device according to the third approach. Any element having the same name as in FIG. 5 referred in the first approach is denoted by the same reference sign and description thereof is omitted except for any changed or extended part. Difference from FIG. 5 is that the train allocation plan producer 15 includes a mathematical model producer 16 and an optimizer 17.

The mathematical model producer 16 produces a mathematical model as an optimization problem in a case where a small operation and a small train correspond to each other in a one-to-one relation. The optimizer 17 determines which small train is allocated to which small operation with a small split-merge iteration number by solving the model (minimizing or quasi-minimizing an objective function).

The above-described various constraints can be satisfied when defined as constraint conditions (constraint equations) in the mathematical model. A constraint condition may be reflected on the mathematical model as a constraint that adds a penalty value to the evaluation value when not satisfied instead of a completely prohibiting constraint as described later.

An example of mathematical modeling is described below.

$$\min. \qquad \sum_{d \in \mathcal{D}} \sum_{(h,i) \in H^2} z_{d,h,i} \qquad (1)$$

$$\sum_{h \in \mathcal{H}(c)} x_{d,u,h} = 1, \forall u \in U(d,c), \forall d \in \mathcal{D}, \forall c \in \mathcal{C}, \qquad (2)$$

$$x_{d,u,h} = 0, \forall u \notin \mathrm{SET}(d,h), \forall h \in \mathcal{H}, \forall d \in \mathcal{D}, \qquad (3)$$

$$\sum_{u \in ARV(d-1,p)} x_{d-1,u,h} = \sum_{v \in DEP(d,p)} x_{d,v,h}, \\ \forall p \in \mathcal{P}, \forall h \in \mathcal{H}, \forall d \in \mathcal{D}, \qquad (4)$$

$$x_{d-1,u,h} + x_{d-1,v,i} + x_{d,s,h} - x_{d,t,i} \leq 2 + z_{d,h,i}, \\ \forall u, v \in \mathrm{UPAIR}(d-1), \forall s, t \in \mathrm{UPAIR}(d), \forall (h,i) \in H^2, \forall d \in \mathcal{D}, (5)$$

$$x_{d,u,h} \in \{0,1\}, \forall h \in \mathcal{H}, \forall u \in U(d), \forall d \in \mathcal{D}, \qquad (6)$$

$$z_{d,h,i} \in \{0,1\}, \forall (h,i) \in H^2, \forall d \in \mathcal{D}. \qquad (7)$$

The definition of each symbol is listed below. The number of vehicles in the definition below is the number of small trains.

- $x_{d,u,h}$: variable having the value of 0 or 1 for whether to use small train h for small operation u on the d-th day. The variable corresponds to a second variable indicating whether to allocate a plurality of trains to a plurality of operations for each day (duration).

- $z_{d,h,i}$: variable having the value of 0 or 1 for whether connection between small train h and small train i needs to be changed (split or integrated) on the d-th day. The variable corresponds to a first variable indicating whether two trains need to be merged or split for each pair of two trains.
- D: set of days from the initial day to the final day of a plan duration
- P: set of places
- H: set of small trains
- $H^2$: set of pairs of two small trains
- C: set of the numbers of vehicles
- H(c): set of small trains the number of vehicles of which is c
- U(d,c): set of small operations the number of vehicles of which is c on the d-th day
- UPAIR(d): set of paired operations on the d-th day
- ARV(d,p): set of small operations arriving at place p on the d-th day
- DEP(d,p): set of small operations departing from place p on the d-th day
- $DEP_{pm}(d,p)$: set of small operations of afternoon operations departing from place p on the d-th day
- SET(d,h): set of small operations allocatable to small train h on the d-th day

Equation (1) is an objective function indicating minimization of the split-merge iteration number. The objective function corresponds to an evaluation function that calculates the evaluation value based on the sum of the above-described first variable ($z_{d,h,i}$).

Equation (2) is a constraint that any of small trains of c vehicles are allocated to each small operation of c vehicles in a mutually exclusive and collectively exhaustive manner. In other words, Equation (2) corresponds to a constraint that one or more small trains the total number of vehicles of which matches that of a plurality of operations are allocated to the plurality of operations by using $x_{d,u,h}$ (second variable).

Equation (3) is a constraint that any small operation in SET(d,h) is allocated to small train h on the d-th day.

Equation (4) is a condition that an arrival place on the (d-1)-th day and a departure place on the d-th day match for small train h (in the case of d = 1, replaced with a constant that the left-hand side is "1" only when an arrival place on the initial day matches p or "0" otherwise).

Equation (5) is a constraint that $z_{d,h,i}$ is required to be "1" when connection between small train h and small train i needs to be removed (small train h and small train i are split) (in the case of d = 1, the part of $x_{d-1,u,h} + x_{d-1,v,i}$ on the left-hand side is replaced with a constant that is "1" when h and i are connected on the initial day or "0" otherwise). The left-hand side is "3" and $z_{d,h,i}$ is "1" in the case of $x_{d-1,u,h} = x_{d-1,v,i} = x_{d,s,h} = 1$ and $x_{d,t,i} = 0$. This expresses that small trains h and i are allocated to paired small operations (u,v) on the (d-1)-th day, and among paired operations (s,t), s is allocated to small train h but t is not allocated to small train i on the d-th day, and thus, split and merge are needed. In this example, equations are presented only for a case where trains connected until right before are split, but for example, a case where a train operated in a lone operation until right before is connected to another train can be modeled by the same equations.

Equations (6) and (7) are constraints indicating that $x_{d,u,h}$ and $z_{d,h,i}$ each have the value of 0 or 1.

The modeling in a case where one operation is allocated to a small train on one day is described above. In a case where two or more operations are allocated to a small train on one day, Equations (4) and (5) described above may be extended by introducing $y_{d,u,v,h}$ indicating that small operation v is allocated to small train h after small operation u.

With the same problem setting as in FIG. 11, the optimizer 17 calculates the value of $x_{d,u,h}$ (second variable) by optimizing or quasi-optimizing the above-described mathematical model, in other words, by minimizing or quasi-minimizing an objective function as follows.

$$X_{1,01a,01F} = X_{1,03a,02F} = X_{1,04a,03F} = X_{1,01b,04F} = X_{1,05,04F} = X_{1,03b,05F} = X_{1,04b,06F} = X_{1,02,07F} = 1,$$

$$X_{2,04a,01F} = X_{2,01a,02F} = X_{2,03a,03F} = X_{2,03b,04F} = X_{2,01b,05F} = X_{2,02b,06F} = X_{2,05b,06F} = X_{2,04b,07F} = 1$$

Such a solution with the remaining $x_{d,u,h} = 0$ is obtained. This solution corresponds to the above-described train allocation plan illustrated in FIG. 22. The optimizer 17 or the train allocation plan producer 15 produces the train allocation plan based on these values of $x_{d,u,h}$ (second variable).

For example, since $x_{1,04a,03F} + x_{1,04b,06F} + x_{2,03a,03F} - x_{2,03b,06F} = 1 + 1 + 1 - 0 = 3$ holds for small trains 03F and 06F allocated to operation 04 on the first day, $z_{d,03F,06F} = 1$ needs to hold to satisfy Equation (5). Thus, it can be understood that z corresponds to the split-merge iteration number.

Thus, it can be understood that optimization of the objective function of Equation (1) corresponds to minimization of the split-merge iteration number (in a strict sense, the above-described mathematical modeling is not applicable to a case where the same small train performs two or more operations on one day, and thus merge and split of two operations on one day cannot be detected but modeling can be easily achieved by extending Equation (5).

The above-described formulation is exemplary and other objective functions and constraint equations may be used. Processing of solving an optimization problem may use a mathematical plan solver such as Gurobi Optimizer or CPLEX. A meta-heuristic solution method such as gradient method, simulated annealing, or genetic algorithm may be used as a solution method. The mathematical plan solver may be configured by an external server connected to the present device through a network such as the Internet. In this case, the present device transmits data of an optimization problem to the mathematical plan solver and acquires data of a solution acquired by the mathematical plan solver.

In this manner, with the mathematical model, it is possible to obtain a train allocation plan with which the split-merge iteration number is minimized.

Fourth approach

In the first to third approaches, a method of splitting an operation into small operations (into how many small operations of how many vehicles an operation is split; referred to as a small operation splitting method) is fixed in advance, but in the present approach, description is made on a case where which combination of small trains of how many vehicles is allocated to an operation can be freely determined. A block diagram of the present approach is FIG. 25, which is the same as in the third approach.

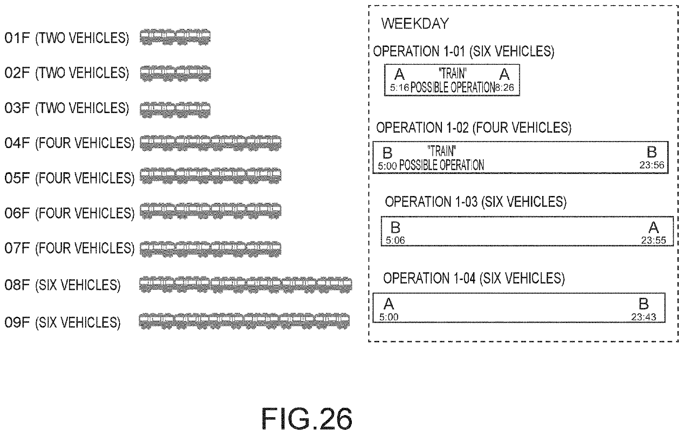

FIG. 26 is an explanatory diagram of the fourth approach. FIG. 26 illustrates a case where there are three kinds of small trains of two vehicles, four vehicles, and six vehicles and two kinds of operations of a four-vehicle operation and a six-vehicle operation. In this case, operation 1-02 that is a four-vehicle operation may be operated only by a four-vehicle small train such as 04F or may be operated by using two two-vehicle small trains such as 01F+02F. The total number of vehicles of small trains needs to match the number of vehicles of an operation. Similarly, operation 1-03 that is a six-vehicle operation may be operated only by a six-vehicle small train such as 08F, may be operated by using three two-vehicle small trains such as 01F+02F+03F, or may be operated by using a two-vehicle small train and a four-vehicle small train such as 01F+04F.

To handle such a case, the mathematical model producer 16 of the train allocation plan producer 15 generates a mathematical model described below as an optimization problem. The optimizer 17 can determine how many small trains are allocated in what combination to each operation with a small split-merge iteration number by solving the model (minimizing or quasi-minimizing an objective function). The above-described various constraints can be satisfied when defined as constraint conditions (constraint equations) in the mathematical model. A constraint condition may be reflected on the mathematical model as a constraint that adds a penalty value to the evaluation value when not satisfied instead of a completely prohibiting constraint as described later.

$$\min . \qquad \sum_{d \in \mathcal{D}} \sum_{(h,i) \in H^2} z_{d,h,i} \qquad (8)$$

$$\sum_{h \in H} A_h x_{d,u,h} = B_{du}, \forall u \in U(d), \forall d \in \mathcal{D}, \qquad (9)$$

$$x_{d,u,h} = 0, \forall u \notin \mathrm{SET}(d,h), \forall h \in \mathcal{H}, \forall d \in \mathcal{D}, \qquad (10)$$

$$\sum_{u \in ARV(d-1,p)} x_{d-1,u,h} = \sum_{v \in DEP(d,p)} x_{d,v,h}, \forall p \in \mathcal{P}, \forall h \in \mathcal{H}, \forall d \in \mathcal{D} \qquad (11)$$

$$x_{d-1,u,h} + x_{d-1,u,i} + x_{d,v,h} - x_{d,v,i} \leq 2 + z_{d,h,i},$$
$$\forall u \in U(d-1), \forall v \in U(d), \forall (h,i) \in H^2, \forall d \in \mathcal{D}, \qquad (12)$$

$$x_{d,u,h} \in \{0,1\}, \forall h \in \mathcal{H}, \forall u \in U(d), \forall d \in \mathcal{D}, \qquad (13)$$

$$z_{d,h,i} \in \{0,1\}, \forall (h,i) \in H^2, \forall d \in \mathcal{D}. \qquad (14)$$

**The** definition of each symbol is listed below.

- $x_{d,u,h}$: variable having the value of 0 or 1 for whether to use small train h for operation u on the d-th day. Note that, unlike the third approach, a plurality of small trains are allocated to operation u in some cases. The variable corresponds to a second variable indicating whether to allocate a plurality of trains to a plurality of operations for each duration.
- $z_{d,h,i}$: variable having the value of 0 or 1 for whether connection between small train h and small train i needs to be changed (merged or split) on the d-th day. The variable corresponds to a first variable indicating whether two trains need to be merged or split for each pair of two trains.
- $A_h$: the number of vehicles of small train h
- $B_{du}$: the number of vehicles of operation u on the d-th day
- D: set of days from the initial day to the final day of a plan duration
- P: set of places
- H: set of small trains
- $H^2$: set of pairs of two small trains
- C: set of the numbers of vehicles
- U(d): set of operations on the d-th day
- ARV(d,p): set of operations arriving at place p on the d-th day
- DEP(d,p): set of operations departing from place p on the d-th day
- SET(d,h): set of operations allocatable to small train h on the d-th day

Equation (8) is an objective function indicating minimization of the split-merge iteration number. The objective function corresponds to an evaluation function that calculates the evaluation value based on the sum of the above-described first variable ($z_{d,h,i}$).

Equation (9) is a constraint that the number of vehicles of an operation matches the number of vehicles of small trains. The left-hand side of Equation (9) represents the number of vehicles of an operation, and the right hand side represents the sum of the numbers of vehicles of all allocated small trains. In other words, Equation (9) corresponds to a constraint that one or more trains the total number of vehicles of which matches that of a plurality of operations are allocated to the plurality of operations by using $x_{d,u,h}$ (second variable).

Equation (10) is a constraint that either operation belonging to SET(d,h) is allocated to small train h on the d-th day.

Equation (11) is a constraint that an arrival place on the (d-1)-th day and a departure place on the d-th day match for small train h.

Equation (12) is a constraint that $z_{d,h,i}$ is required to be "1" when connection between small train h and small train i needs to be removed. The idea is the same as in the third approach, but in this example, problem setting is such that a plurality of small trains can be allocated to the same operation, and thus indexes are different.

Equations (13) and (14) are constraints indicating that $x_{d,u,h}$ and $z_{d,h,i}$ each have the value of 0 or 1.

Equation (9) is main difference from the third approach described above.

For example, in a case of operation 1-03 in FIG. 26 = u, since $B_{1,u}$ is "6", Equation (15) below needs to be satisfied.

$$\sum_{h=\{01F,02F,03F\}} 2x_{1,u,h} + \sum_{h=\{04F,05F,06F,07F\}} 4x_{1,u,h} + \sum_{h=\{08F,09F\}} 6x_{1,u,h} = 6 \tag{15}$$

The above-described constraint equation is satisfied in a case in which the sum of the numbers of vehicles is "6", such as a case of $x_{1,u,01F} = x_{1,u,02F} = x_{1,u,03F} = 1$ and any other x (more specifically, any other x related to operation 1-03 on the first day; this applies below as well) = 0, a case of $x_{1,u,01F} = x_{1,u,04F} = 1$ and any other x = 0, and a case of $x_{1,u,08F} = 1$ and any other x = 0.

Other description than the above description is the same as in the third approach and thus omitted.

With the mathematical model, it is possible to obtain a train allocation plan with which the split-merge iteration number is minimized with consideration of the freedom of combination of small trains.

Variations of evaluation function

Variations of an evaluation function will be described below.

The train allocation plan producer 15 (mathematical model producer 16) of the third approach or the fourth approach can design an evaluation function as described below in accordance with an individual condition set with individual condition information 24. In penalty value addition described below, a penalty term may be added to the evaluation function. Determination of whether each condition holds may be produced in the same manner as the above-described mathematical model constraints.

Operation connection condition

An operation connection condition is a condition on the order of allocated operations. There is a condition that operations are allocated in the order of a first operation and a second operation. In this case, the train allocation plan producer 15 adds a penalty value to the evaluation value when an operation other than the second operation is allocated to an optional train after the first operation. For example, there is a condition that operation v is allocated after operation u on the same day whenever possible. Points are deducted when a small operation other than operation v is allocated to small train on the same day after a small operation of operation u or when no small operation is allocated on the same day. The point deduction corresponds to increase of the value of a penalty term provided in an evaluation function as a target of the above-described minimization, in other words, addition (or subtraction) of a penalty value to (or from) the value (the evaluation value) of the evaluation function (this applies below as well).

There is a condition that after operation u on a day, weekday operation v is allocated on the next day whenever possible. Points are deducted (a penalty value is added) when another small operation is allocated to a small train after a small operation of operation u on the same day or a when small operation other than small operation v is allocated first on the next day.

There is a condition that no operation is allocated on the same day after operation u whenever possible. Points are deducted (a penalty value is added) when a small operation is allocated to a small train on the same day after a small operation of operation u.

Designated operation condition

There is a condition (allotment possible operation condition) that only an operation (designation operation) with which work such as examination or cleaning is possible is allocated on a day of the work. The train allocation plan producer 15 adds, based on a designated operation condition that designates any operation allocatable to each train, a penalty value to the evaluation value when an operation not designated by the designated operation condition is allocated to the train. For example, in a case where the depot work plan is allocated to a small train on a day, points are deducted (a penalty value is added) when a small operation (small operation with which depot work cannot be performed) other than an operation that can be allotted to the train on the day is allocated.

Prioritized/non-prioritized train condition

For example, there is a condition that small train h is used whenever possible. The train allocation plan producer 15 adds a larger penalty value to the evaluation value as the allocation frequency of each train is lower or the sum of the operation time or operation distance of each allocated operation is shorter. For example, points are deducted (a penalty value is added) when the sum of the travel time (= arrival time - departure time) of each small operation allocated to a small train in a plan duration is equal to or shorter than a predetermined time. Alternatively, points are deducted (a penalty value is added) when the travel distance sum is equal to or shorter than a predetermined distance. In this case, information on the travel distance of each operation is obtained as input information in advance.

There is a condition that train h is not used whenever possible. The train allocation plan producer 15 adds a larger penalty value to the evaluation value as the allocation frequency of each train is higher or the sum of the operation time or operation distance of each allocated operation is longer. For example, points are deducted when the sum of the travel time (= arrival time - departure time) of each small operation allocated to a small train in a plan duration is equal to or longer than a predetermined time. Alternatively, points are deducted (a penalty value is added) when the travel distance sum is equal to or longer than a predetermined value.

Allotment impossible operation condition

There is a condition that determines an operation (allotment impossible operation) prohibited to be allocated to a small train. Points are deducted when the allotment impossible operation is allocated to the small train. Specifically, the train allocation plan producer 15 adds, based on the allotment impossible operation condition, a penalty value to the evaluation value when an operation not permitted by the allotment impossible operation condition is allocated to a train (small train).

Depot condition (condition based on time taken for split-merge work, condition (FILO condition) with consideration on first-in last-out structure of depot)

There is a condition (split-merge time condition) based on a time taken for split-merge work. A time taken for split work or merge work is determined as a split-merge condition for each train or each place where train split work or merge work is performed. For example, the train allocation plan producer 15 deducts points when a value obtained by subtracting n from m is a negative or small value in a case where n minutes are taken for split-merge work at depot A and m minutes is a time from an arrival time right before split-merge work of small trains at depot A to a departure time right after split-merge work. In this manner, the train allocation plan producer 15 may add a larger penalty value to the evaluation value as the time taken for split work or merge work is longer. Accordingly, it is expected that a train allocation plan with a shorter split-merge time is obtained when there are a plurality of split-merge candidates. The time of split-merge work may be determined for each depot or each train.

In a case where a depot has a first-in last-out structure, for example, the evaluation value is adjusted based on the way of vehicle separation when train split-merge work is performed at the depot, as a condition with consideration on the structure. In the present example, it is assumed that when allocating two or more trains to an operation, the train allocation plan producer 15 determines an arrangement order of the two or more trains when merged and the two or more trains are merged by merge work in the determined arrangement order. The train allocation plan producer 15 adds, to the evaluation value, a penalty value in accordance with the position of a train split from two or more merged trains (small trains) by split work and a merge position when the split train is merged to another train by merge work. For example, work at depot A that the leading small train in a series of small trains is separated and connected to the leading end of another small train group requires movement of only one small train and thus takes low cost. However, for example, in a case where the leading small train in a small train group is separated and connected to the tail end of another small train group, in a case where the tailing small train in a small train group is separated and connected to another small train group, or in a case where the leading small trains of two small train groups are interchanged, large point deduction (penalty value addition) may be performed because two or more small trains normally need to be moved, and thus two or more operators are needed and longer work time is needed. Accordingly, it is expected to obtain a train allocation plan with which split-merge work that needs longer time and more manpower is avoided whenever possible.

Cab condition

There is a condition that train F01 uses an upbound cab whenever possible. For example, in a train allocation plan production algorithm, the order of small trains allocated to each operation is additionally considered, and it is assumed that only the front cab of the leading small train and the rear cab of the tailing small train are used in the operation. Specifically, when allocating two or more trains to an operation, the train allocation plan producer 15 determines an arrangement order in which the two or more trains are merged. It is assumed that the two or more trains are merged in the determined arrangement order by merge work. It is assumed that cabs of the leading and tailing vehicles of the train unit of the two or more trains allocated to the operation are used during execution of the operation. The train allocation plan producer 15 provides a constraint that the sum of use times of the cabs in the plan duration are equalized. For example, a target value of the use time sum of each of the front and rear cabs of the small trains may be determined in advance, and larger point deduction (penalty value addition) may be performed as deviation from the target value is larger. Accordingly, it is expected to obtain a train allocation plan with which the use times of cabs are equalized.

Fifth approach

Movement of a plurality of trains may be controlled on target routes on which the plurality of trains travel by using a train allocation plan (operation plan) produced in the first to fourth approaches.

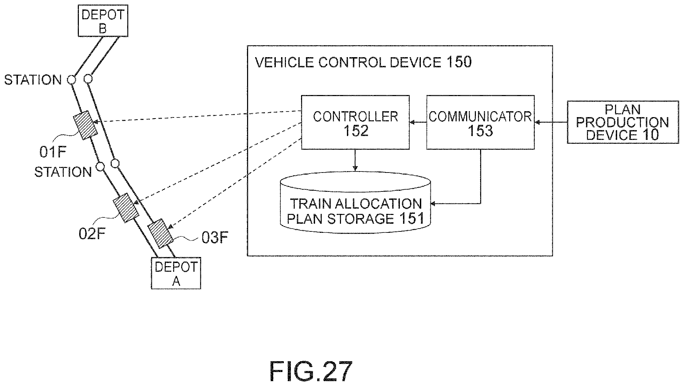

FIG. 27 is a block diagram illustrating an example of a vehicle operation system according to the fifth approach. The plan production device 10 and a vehicle control device 150 are included. The plan production device 10 and the vehicle control device 150 can communicate each other through a communication network. The plan production device 10 transmits information on a produced train allocation plan to the vehicle control device 150. A communicator 153 of the vehicle control device 150 receives the information on the train allocation plan and stores the information in a train allocation plan storage 151. A controller 152 (controlling circuitry) of the vehicle control device 150 performs operation control of trains 01F, 02F, and 03F on routes in accordance with the information. Although only three trains are illustrated in the diagram, a larger number of trains may be present. In a case where the information on the train allocation plan generated by the plan production device 10 is in a format that cannot be directly interpreted by the controller 152, the information may be converted into information in a format that can be interpreted by the controller 152, and the controller 152 may perform operation control based on the converted information. Each train may be unmanned or manned. As an example, the vehicle control device 150 may perform complete automated operation of each train. For example, each train is a railway train and railway of complete automated operation is achieved. The controller 152 and the train allocation plan storage 151 of the vehicle control device 150 may be configured by an information processing device incorporated in the plan production device 10.

(Hardware configuration)

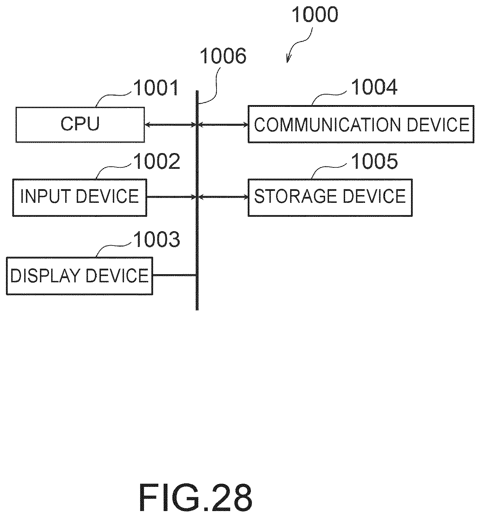

A hardware configuration of the plan production device according to the above approaches will be described with reference to FIG. 28.

FIG. 28 shows a hardware configuration of the plan production device, which is an information processing apparatus according to the approaches. As shown in FIG. 28, the plan production device according to the approaches of the present invention is made up of a computer 1000. The computer 1000 includes a CPU 1001 (central processing unit), input devices 1002, a display device 1003, a communications device 1004, and a storage device 1005, which are interconnected via a bus 1006.

The CPU 1001 is a control unit and arithmetic unit of the computer 1000. The CPU 1001 performs computational processes based on data and programs received as input from various devices (e.g., the input devices 1002, the communications device 1004, and the storage device 1005) connected via the bus 1006 and outputs computational results and control signals to various devices (e.g., the display device 1003, the communications device 1004, and the storage device 1005) connected via the bus 1006.

Specifically, the CPU 1001 executes an OS (operating system) of the computer 1000, a branch line plan production program (information processing program), and the like and controls various devices making up the computer 1000. The branch line plan production program makes the computer 1000 implement the above-mentioned functional components of the plan production device. As the CPU 1001 executes the branch line plan production program, the computer 1000 functions as the plan production device.

The input devices 1002 are used to enter information to the computer 1000. The input devices 1002 are, for example, a keyboard, a mouse, and/or a touch panel, but are not limited thereto. The input devices 1002 allow the user to enter input information.

The display device 1003 is used to display images and videos. The display device 1003 is, for example, an LCD (liquid crystal display), a CRT (cathode ray tube), or a PDP (plasma display panel), but is not limited thereto. The user can display optimization results on the display device 1003.

The communications device 1004 allows the computer 1000 to communicate with an external device by radio or by wire. The communications device 1004 includes a modem, a hub, and a router, but is not limited thereto. The input information may be sent from the external device via the communications device 1004.

The storage device 1005 is a storage medium configured to store the OS of the computer 1000, the branch line plan production program, data necessary for execution of the branch line plan production program, and data generated by the execution of the branch line plan production program. The storage device 1005 includes a main storage device and external storage devices. The main storage device is, for example, RAM, DRAM, or SRAM, but is not limited thereto. The external storage devices are a hard disk, an optical disk, a flash memory, and a magnetic tape, but are not limited thereto.

Note that the computer 1000 may include one or more of the CPU 1001, the input devices 1002, the display device 1003, the communications device 1004, and the storage device 1005, and may be connected with a peripheral such as a printer or a scanner. The plan production device may be made up of the single computer 1000 or may be configured as a system made up of a plurality of the computers 1000 connected with one another.

Furthermore, the branch line plan production program may be prestored in the storage device 1005 of the computer 1000, stored in a storage medium such as a CD-ROM, or uploaded to the Internet. In any case, when executed by being installed on the computer 1000, the branch line plan production program can make up the plan production device.

While certain arrangements have been described, these arrangements have been presented by way of example only, and are not intended to limit the scope of the invention as defined by the appended claims. Indeed, the apparatus described herein may be embodied in a variety of other forms; furthermore various omissions, substitutions and changes in the form of the apparatuses described herein may be made providing that such omissions, substitutions and changes fall within the scope of the appended claims.

**Claims**

**1.** An information processing device comprising a processor (15) configured to

acquire

information on a plurality of services each including a service duration,

information on a number of vehicles necessary for execution of each of the plurality of services, and train information including a number of vehicles included in each of a plurality of trains (01F, 02F, 03F) mergeable or splittable among two or more trains; and

produce a service plan by allocating one or more trains to each of the plurality of services, a total number of vehicles included in the allocated one or more trains to each of the plurality of services matches the number of vehicles necessary for the service:
wherein
the plurality of trains are repeatedly allocatable to two or more services, the service durations of the two or more services do not overlap each other,
merge work of two or more trains is needed to allocate the two or more trains to one of the plurality of services, and split work of the merged two or more trains is needed to allocate the merged two or more trains to different ones of the plurality of services, and
the processor produces the service plan based on at least one of a merge iteration number or a split iteration number, such that at least one of the merge iteration number or the split iteration number is minimized, the merge iteration number being a number of times that the merge work is performed, the split iteration number being a number of times that the split work is performed.

2. The information processing device according to claim 1, wherein the processor (15) is configured to produce the service plan by minimizing at least one of the merge iteration number or the split iteration number or by reducing at least one of the merge iteration number or the split iteration number to a threshold value or smaller.

3. The information processing device according to claim 2, wherein the processor (15) is configured to produce the service plan by minimizing a sum of the merge iteration number and the split iteration number or by reducing the sum to a threshold value or smaller.

4. The information processing device according to any one of claims 1 to 3, wherein the processor (15) is configured to:

allocate the one or more trains to each of the plurality of services with a constraint of work plan information indicating works to be performed on the plurality of trains and time slots in which the works are performed, detect constraint violation in a case where the work is unable to be performed on the train in the time slot due to the service allocated to the train, and
produce the service plan based on the evaluation value depending on a number of times of detection of the constraint violation and on at least one of the merge iteration number or the split iteration number.

5. The information processing device according to claim 4, wherein

the service durations of the plurality of services each include a departure time and an arrival time, the plurality of trains have priority ranks, and
the processor (15) is configured to recursively perform to calculate the evaluation value with the plurality of trains sequentially allocated in descending order of the priority ranks to the plurality of services in ascending chronological order of the departure times and to exchanging allocations of the allocated trains to the services based on the evaluation value, and detects an allocation pattern with which the evaluation value is minimized or reduced to a threshold value or smaller and
produce the service plan based on the detected pattern.

6. The information processing device according to any one of claims 1 to 5, wherein

the plurality of services are determined for each of a plurality of durations, and
the processor (15) is configured to:

generate, by using second variables that indicate whether to allocate the plurality of trains to the plurality of services for each of the durations, a constraint that the one or more trains a total number of vehicles of which matches the total number of vehicles required for each of the plurality of services are allocated to each the plurality of services,
generate an evaluation function that calculates an evaluation value based on a sum of first variables indicating whether two trains need to be merged or split for each of the durations and each pair of two trains, calculate values of the second variables by minimizing or quasi-minimizing the evaluation value under the constraint, and produces the service plan based on the values of the second variables.

7. The information processing device according to claim 6, wherein based on a service connection condition that services are allocated in an order of a first service and a second service, the processor (15) is configured to add a penalty value to the evaluation value in a case where a service other than the second service is allocated to an optional train after the first service.

8. The information processing device according to claim 6 or 7, wherein for each of the durations, the processor (15) is configured to add, based on a designated service condition that designates any service allocatable to each train among the plurality of services, a penalty value to the evaluation value in a case where a service not designated by the designated service condition is allocated to the train.

9. The information processing device according to any one of claims 6 to 8, wherein the processor (15) is configured to add a larger penalty value to the evaluation value as allocation frequency of a first train among the plurality of trains is higher or as a sum of service times or service distances of the allocated services is longer.

10. The information processing device according to any one of claims 6 to 9, wherein the processor (15) is configured to add a larger penalty value to the evaluation value as allocation frequency of a first train among the plurality of trains is lower or as a sum of service times or service distances of the allocated services is shorter.

11. The information processing device according to any one of claims 6 to 10, wherein the processor (15) is configured to add, based on an allotment impossible service condition that a condition of a train not allocatable is determined for each of the services, a penalty value to the evaluation value when a service not permitted by the allotment impossible service condition is allocated to the train.

12. The information processing device according to any one of claims 6 to 11, wherein

a time taken for split work or merge work is determined for each of the trains or each place where the split work or the merge work of the train is performed, and
the processor (15) is configured to add a larger penalty value to the evaluation value as the time taken for the split work or the merge work is longer.

13. The information processing device according to any one of claims 6 to 12, wherein

each of the plurality of trains includes a cab in at least one of vehicles at respective ends,
when allocating two or more trains to one of the services, the processor (15) is configured to determine an arrangement order in which the two or more trains are merged, and the two or more trains are merged in the arrangement order by the merge work,
cabs of leading and tailing vehicles of a train unit of the two or more trains allocated to the service are used during execution of the service, and
the processor (15) is configured to add a larger penalty value to the evaluation value as a sum of use times of each of the cabs included in the plurality of trains is deviated from a target time of each cab.

14. The information processing device according to any one of claims 6 to 13, wherein

when allocating two or more trains to one of the services, the processor (15) is configured to determine an arrangement order in which the two or more trains are merged, and the two or more trains are merged in the arrangement order by the merge work,
the processor (15) is configured to add, to the evaluation value, a penalty value in accordance with a split position of a train split from the two or more merged trains by the split work and a merge position of the split train when the split train is merged to another train by the merge work.

15. The information processing device according to any one of claims 1 to 14, wherein the plurality of trains are each a railway train.

16. The information processing device according to any one of claims 1 to 15, further comprising a controlling circuitry configured to control moving of the plurality of trains based on the service plan, wherein the plurality of trains are each movable on a target route.

17. An information processing method comprising:

acquiring

information on a plurality of services each including a service duration,
information on a number of vehicles necessary for execution of each of the plurality of services, and
train information including a number of vehicles included in each of a plurality of trains mergeable or splittable among two or more trains; and

producing a service plan by allocating one or more trains to each of the plurality of services, a total number of vehicles included in the allocated one or more trains to each of the plurality of services matches the number of vehicles necessary for the service:

wherein the plurality of trains are repeatedly allocatable to two or more services, the service durations of the two or more services do not overlap each other,
merge work of two or more trains is needed to allocate the two or more trains to one of the plurality of services, and split work of the merged two or more trains is needed to allocate the merged two or more trains to different ones of the plurality of services, and
the method comprises producing the service plan based on, at least one of a merge iteration number or a split iteration number, such that at least one of the merge iteration number or the split iteration number is minimized, the merge iteration number being a number of times that the merge work is performed, or the split iteration number being a number of times that the split work is performed.

18. A computer program which causes a computer to perform a process comprising:

acquiring

information on a plurality of services each including a service duration,
information on a number of vehicles necessary for execution of each of the plurality of services, and
train information including a number of vehicles included in each of a plurality of trains mergeable or splittable among two or more trains; and

producing a service plan by allocating one or more trains to each of the plurality of services, a total number of vehicles included in the allocated one or more trains to each of the plurality of services matches the number of vehicles necessary for the service:

wherein the plurality of trains are repeatedly allocatable to two or more services, the service durations of the two or more services do not overlap each other,
merge work of two or more trains is needed to allocate the two or more trains to one of the plurality of services, and split work of the merged two or more trains is needed to allocate the merged two or more trains to different ones of the plurality of services, and
the processes comprise producing the service plan based on, at least one of a merge iteration number or a split iteration number, such that at least one of the merge iteration number or the split iteration number is minimized, the merge iteration number being a number of times that the merge work is performed, or the split iteration number being a number of times that the split work is performed.

**Patentansprüche**

1. Informationsverarbeitungsvorrichtung, umfassend einen Prozessor (15), der konfiguriert ist,

zu erfassen

Informationen über eine Vielzahl von Diensten, die jeweils eine Dienstdauer einschließen,
Informationen über eine Anzahl der Fahrzeuge, die für die Ausführung jedes der Vielzahl von Diensten erforderlich sind, und
Zuginformationen, die eine Anzahl von Fahrzeugen einschließen, die in jedem von einer Vielzahl von Zügen (01F, 02F, 03F), die unter zwei oder mehr Zügen zusammenführbar oder trennbar sind, eingeschlossen sind;

und

einen Dienstplan zu erstellen, indem jedem von der Vielzahl von Diensten ein oder mehrere Züge zugeteilt werden, wobei eine Gesamtzahl der Fahrzeuge, die in dem einem oder den mehreren Zügen, die jedem von der Vielzahl von Diensten zugeteilt wurden, eingeschlossen ist, mit der Anzahl von Fahrzeugen übereinstimmt, die für den Dienst erforderlich ist;

wobei die Vielzahl von Zügen wiederholt zwei oder mehr Diensten zuteilbar ist, wobei die Dienstdauern der zwei oder mehr Dienste einander nicht überschneiden, Zusammenführungsarbeit von zwei oder mehr Zügen nötig ist, um die zwei oder mehr Züge einem von der Vielzahl von Diensten zuzuteilen, und Trennungsarbeit der zusammengeführten zwei oder mehr Züge nötig ist, um die zusammengeführten zwei oder mehr Züge unterschiedlichen Diensten von der Vielzahl von Diensten zuzuteilen, und der Prozessor den Dienstplan auf der Grundlage von mindestens einem von einer Zusammenführungsiterationszahl oder einer Trennungsiterationszahl erstellt, sodass mindestens eine der Zusammenführungsiterationszahl oder der Trennungsiterationszahl minimiert wird, wobei die Zusammenführungsiterationszahl eine Anzahl von Malen ist, wie oft die Zusammenführungsarbeit durchgeführt wird, die Trennungsiterationszahl eine Anzahl von Malen ist, wie oft die Trennungsarbeit durchgeführt wird.

2. Informationsverarbeitungsvorrichtung nach Anspruch 1, wobei der Prozessor (15) konfiguriert ist, den Dienstplan zu erstellen, indem er mindestens eine der Zusammenführungsiterationszahl oder der Trennungsiterationszahl minimiert oder indem er mindestens eine der Zusammenführungsiterationszahl oder der Trennungsiterationszahl auf einen Schwellenwert oder darunter verringert.

3. Informationsverarbeitungsvorrichtung nach Anspruch 2, wobei der Prozessor (15) konfiguriert ist, den Dienstplan zu erstellen, indem er eine Summe aus der Zusammenführungsiterationszahl und der Trennungsiterationszahl minimiert oder indem er die Summe auf einen Schwellenwert oder kleiner verringert.

4. Informationsverarbeitungsvorrichtung nach einem der Ansprüche 1 bis 3, wobei der Prozessor (15) konfiguriert ist:

den einen oder die mehreren Züge jedem von der Vielzahl von Diensten mit einer Einschränkung von Arbeitsplaninformationen zuzuteilen, die die an der Vielzahl von Zügen durchzuführenden Arbeiten und die Zeitfenster, in denen die Arbeiten durchgeführt werden, angeben, eine Einschränkungsverletzung in einem Fall zu ermitteln, in dem die Arbeit an dem Zug aufgrund des dem Zug zugeteilten Dienstes nicht in dem Zeitfenster durchgeführt werden kann, und den Dienstplan auf der Grundlage des Bewertungswerts zu erstellen, der von einer Anzahl von Malen der Ermittlung der Einschränkungsverletzung und von mindestens einer der Zusammenführungsiterationszahl oder der Trennungsiterationszahl abhängt.

5. Informationsverarbeitungsvorrichtung nach Anspruch 4, wobei

die Dienstdauern der Vielzahl von Diensten jeweils eine Abfahrtszeit und eine Ankunftszeit einschließen, die Vielzahl von Zügen Prioritätsränge aufweist, und der Prozessor (15) konfiguriert ist, rekursiv die Berechnung des Bewertungswerts durchzuführen, wobei die Vielzahl von Zügen in absteigender Reihenfolge der Prioritätsränge der Vielzahl von Diensten in aufsteigender chronologischer Reihenfolge der Abfahrtszeiten zugeteilt werden, und Zuteilungen der den Diensten zugeteilten Züge auf der Grundlage des Bewertungswerts zu tauschen, und ein Zuteilungsmuster zu ermitteln, mit dem der Bewertungswert minimiert oder auf einen Schwellenwert oder kleiner verringert wird, und den Dienstplan auf der Grundlage des ermittelten Musters zu erstellen.

6. Informationsverarbeitungsvorrichtung nach einem der Ansprüche 1 bis 5, wobei

die Vielzahl von Diensten für jede von einer Vielzahl von Dauern bestimmt wird, und der Prozessor (15) konfiguriert ist:

durch Verwendung von zweiten Variablen, die für jede der Dauern angeben, ob die Vielzahl von Zügen der Vielzahl von Diensten zugeteilt werden soll, eine Einschränkung zu erzeugen, dass der eine oder die mehreren Züge, deren Gesamtzahl an Fahrzeugen mit der für jeden der Vielzahl von Diensten benötigten Gesamtzahl an Fahrzeugen übereinstimmt, jedem der Vielzahl von Diensten zugeteilt werden,

eine Bewertungsfunktion zu erzeugen, die auf der Grundlage einer Summe von ersten Variablen, die für jede der Dauern und jedes Paar von zwei Zügen angeben, ob zwei Züge zusammengeführt oder getrennt werden müssen, einen Bewertungswert berechnet,

Werte der zweiten Variablen durch Minimieren oder Quasi-Minimieren des Bewertungswerts unter der Einschränkung zu berechnen und den Dienstplan auf der Grundlage der Werte der zweiten Variablen zu erstellen.

7.  Informationsverarbeitungsvorrichtung nach Anspruch 6, wobei der Prozessor (15) konfiguriert ist, auf der Grundlage einer Dienstverbindungsbedingung, dass Dienste in einer Reihenfolge eines ersten Dienstes und eines zweiten Dienstes zugeteilt werden, einen Strafwert zum Bewertungswert in einem Fall zu addieren, in dem einem optionalen Zug nach dem ersten Dienst ein anderer Dienst als der zweite Dienst zugeteilt wird.

8.  Informationsverarbeitungsvorrichtung nach Anspruch 6 oder 7, wobei für jede der Dauern der Prozessor (15) konfiguriert ist, auf der Grundlage einer festgelegten Dienstbedingung, die jeglichen Dienst von der Vielzahl von Diensten festlegt, der jedem Zug zuteilbar ist, einen Strafwert zum Bewertungswert in einem Fall zu addieren, in dem dem Zug ein Dienst zugeteilt wird, der nicht durch die festgelegte Dienstbedingung festgelegt ist.

9.  Informationsverarbeitungsvorrichtung nach einem der Ansprüch 6 bis 8, wobei der Prozessor (15) konfiguriert ist, einen desto größeren Strafwert zum Bewertungswert zu addieren, je höher die Zuteilungshäufigkeit eines ersten Zuges unter der Vielzahl von Zügen ist oder je länger die Summe der Dienstzeiten oder Dienststrecken der zugeteilten Dienste ist.

10. Informationsverarbeitungsvorrichtung nach einem der Ansprüche 6 bis 9, wobei der Prozessor (15) konfiguriert ist, einen desto größeren Strafwert zum Bewertungswert zu addieren, je niedriger die Zuteilungshäufigkeit eines ersten Zuges unter der Vielzahl von Zügen ist oder je kürzer die Summe der Dienstzeiten oder Dienststrecken der zugeteilten Dienste ist.

11. Informationsverarbeitungsvorrichtung nach einem der Ansprüche 6 bis 10, wobei der Prozessor (15) konfiguriert ist, auf der Grundlage einer Zuteilungsunmöglichkeitsdienstbedingung, bei der für jeden der Dienste eine Bedingung eines nicht zuteilbaren Zuges bestimmt wird, einen Strafwert zum Bewertungswert zu addieren, wenn dem Zug ein Dienst zugeteilt wird, der nach der Zuteilungsunmöglichkeitsdienstbedingung nicht zulässig ist.

12. Informationsverarbeitungsvorrichtung nach einem der Ansprüche 6 bis 11, wobei

eine für die Trennungsarbeit oder Zusammenführungsarbeit benötigte Zeit für jeden der Züge oder jeden Ort, an dem die Trennungsarbeit oder die Zusammenführungsarbeit des Zuges durchgeführt wird, bestimmt wird, und der Prozessor (15) konfiguriert ist, einen desto größeren Strafwert zum Bewertungswert zu addieren, je länger die für die Trennungsarbeit oder Zusammenführungsarbeit benötigte Zeit ist.

13. Informationsverarbeitungsvorrichtung nach einem der Ansprüche 6 bis 12, wobei

jeder der Vielzahl von Zügen einen Führerstand in mindestens einem der Fahrzeuge an den jeweiligen Enden einschließt,

der Prozessor (15) konfiguriert ist, wenn er einem der Dienste zwei oder mehr Züge zuteilt, eine Anordnungsreihenfolge zu bestimmen, in der die zwei oder mehr Züge zusammengeführt werden, und die zwei oder mehr Züge durch die Zusammenführungsarbeit in der Anordnungsreihenfolge zusammengeführt werden,

Führerstände von führenden und nachlaufenden Fahrzeugen einer Zugeinheit der zwei oder mehr dem Dienst zugeteilten Züge während der Ausführung des Dienstes verwendet werden, und

der Prozessor (15) konfiguriert ist, einen desto größeren Strafwert zum Bewertungswert zu addieren, je stärker eine Summe von Nutzungszeiten eines jeden der in der Vielzahl von Zügen eingeschlossenen Führerstände von einer Zielzeit jedes Führerstands abweicht.

14. Informationsverarbeitungsvorrichtung nach einem der Ansprüche 6 bis 13, wobei

der Prozessor (15) konfiguriert ist, wenn er einem der Dienste zwei oder mehr Züge zuteilt, eine Anordnungsreihenfolge zu bestimmen, in der die zwei oder mehr Züge zusammengeführt werden, und die zwei oder mehr Züge durch die Zusammenführungsarbeit in der Anordnungsreihenfolge zusammengeführt werden,

der Prozessor (15) konfiguriert ist, zu dem Bewertungswert einen Strafwert zu addieren, und zwar gemäß einer Trennposition eines Zuges, der durch die Trennungsarbeit von den zwei oder mehr zusammengeführten Zügen getrennt wurde, und einer Zusammenführungsposition des getrennten Zuges, wenn der getrennte Zug durch die Zusammenführungsarbeit mit einem anderen Zug zusammengeführt wird.

15. Informationsverarbeitungsvorrichtung nach einem der Ansprüche 1 bis 14, wobei die Vielzahl von Zügen jeweils Eisenbahnzüge sind.

16. Informationsverarbeitungsvorrichtung nach einem der Ansprüche 1 bis 15, ferner umfassend eine Steuerschaltung, die konfiguriert ist, die Bewegung der Vielzahl von Zügen auf der Grundlage des Dienstplans zu steuern, wobei die Vielzahl von Zügen jeweils auf einer Zielroute bewegbar ist.

17. Informationsverarbeitungsverfahren, umfassend:

Erfassen von

Informationen über eine Vielzahl von Diensten, die jeweils eine Dienstdauer einschließen, Informationen über eine Anzahl der Fahrzeuge, die für die Ausführung jedes der Vielzahl von Diensten erforderlich sind, und

Zuginformationen, die eine Anzahl von Fahrzeugen einschließen, die in jedem von einer Vielzahl von Zügen, die unter zwei oder mehr Zügen zusammenführbar oder trennbar sind, eingeschlossen sind; und

Erstellen eines Dienstplans, indem jedem von der Vielzahl von Diensten ein oder mehrere Züge zugeteilt werden, wobei eine Gesamtzahl der Fahrzeuge, die in dem einem oder den mehreren Zügen, die jedem von der Vielzahl von Diensten zugeteilt wurden, eingeschlossen ist, mit der Anzahl von Fahrzeugen übereinstimmt, die für den Dienst erforderlich ist;

wobei die Vielzahl von Zügen wiederholt zwei oder mehr Diensten zuteilbar ist, wobei die Dienstdauern der zwei oder mehr Dienste einander nicht überschneiden,
Zusammenführungsarbeit von zwei oder mehr Zügen nötig ist, um die zwei oder mehr Züge einem von der Vielzahl von Diensten zuzuteilen, und Trennungsarbeit der zusammengeführten zwei oder mehr Züge nötig ist, um die zusammengeführten zwei oder mehr Züge unterschiedlichen Diensten von der Vielzahl von Diensten zuzuteilen, und
das Verfahren Erstellen des Dienstplans auf der Grundlage von mindestens einem von einer Zusammenführungsiterationszahl oder einer Trennungsiterationszahl umfasst, sodass mindestens eine der Zusammenführungsiterationszahl oder der Trennungsiterationszahl minimiert wird, wobei die Zusammenführungsiterationszahl eine Anzahl von Malen ist, wie oft die Zusammenführungsarbeit durchgeführt wird, und die Trennungsiterationszahl eine Anzahl von Malen ist, wie oft die Trennungsarbeit durchgeführt wird.

18. Computerprogramm, das einen Computer veranlasst, einen Prozess durchzuführen, der umfasst:

Erfassen von

Informationen über eine Vielzahl von Diensten, die jeweils eine Dienstdauer einschließen,
Informationen über eine Anzahl der Fahrzeuge, die für die Ausführung jedes der Vielzahl von Diensten erforderlich sind, und
Zuginformationen, die eine Anzahl von Fahrzeugen einschließen, die in jedem von einer Vielzahl von Zügen, die unter zwei oder mehr Zügen zusammenführbar oder trennbar sind, eingeschlossen sind; und

Erstellen eines Dienstplans, indem jedem von der Vielzahl von Diensten ein oder mehrere Züge zugeteilt werden, wobei eine Gesamtzahl der Fahrzeuge, die in dem einem oder den mehreren Zügen, die jedem von der Vielzahl von Diensten zugeteilt wurden, eingeschlossen ist, mit der Anzahl von Fahrzeugen übereinstimmt, die für den Dienst erforderlich ist;

wobei die Vielzahl von Zügen wiederholt zwei oder mehr Diensten zuteilbar ist, wobei die Dienstdauern der zwei oder mehr Dienste einander nicht überschneiden,
Zusammenführungsarbeit von zwei oder mehr Zügen nötig ist, um die zwei oder mehr Züge einem von der Vielzahl von Diensten zuzuteilen, und Trennungsarbeit der zusammengeführten zwei oder mehr Züge nötig ist, um die zusammengeführten zwei oder mehr Züge unterschiedlichen Diensten von der Vielzahl von Diensten zuzuteilen, und

die Prozesse Erstellen des Dienstplans auf der Grundlage von mindestens einem von einer Zusammenführungsiterationszahl oder einer Trennungsiterationszahl umfassen, sodass mindestens eine der Zusammenführungsiterationszahl oder der Trennungsiterationszahl minimiert wird, wobei die Zusammenführungsiterationszahl eine Anzahl von Malen ist, wie oft die Zusammenführungsarbeit durchgeführt wird, und die Trennungsiterationszahl eine Anzahl von Malen ist, wie oft die Trennungsarbeit durchgeführt wird.

**Revendications**

1. Dispositif de traitement d'informations comprenant un processeur (15) configuré pour

   acquérir

   des informations sur une pluralité de services, chacun incluant une durée de service,
   des informations sur un nombre de véhicules nécessaires à l'exécution de chacun de la pluralité de services, et
   des informations sur des trains incluant un nombre de véhicules inclus dans chacun d'une pluralité de trains (01F, 02F, 03F) pouvant être fusionnés ou divisés entre deux trains ou plus ; et

   produire un plan de service en allouant un ou plusieurs trains à chacun de la pluralité de services, un nombre total de véhicules inclus dans l'un ou les plusieurs trains alloués à chacun de la pluralité de services correspond au nombre de véhicules nécessaires au service :

   dans lequel la pluralité de trains est allouée de manière répétée à deux services ou plus, les durées de service des deux ou plusieurs services ne se chevauchent pas,
   une opération de fusion de deux ou plusieurs trains est nécessaire pour allouer les deux ou plusieurs trains à un de la pluralité de services, et une opération de division des deux ou plusieurs trains fusionnés est nécessaire pour allouer les deux ou plusieurs trains fusionnés à différents services de la pluralité de services, et
   le processeur produit le plan de service sur la base d'au moins un parmi un nombre d'itérations de fusion ou un nombre d'itérations de division, de sorte qu'au moins un parmi le nombre d'itérations de fusion ou du nombre d'itérations de division est minimisé, le nombre d'itérations de fusion étant un nombre de fois que l'opération de fusion est réalisée, le nombre d'itérations de division étant un nombre de fois que l'opération de division est réalisée.

2. Dispositif de traitement d'informations selon la revendication 1, dans lequel le processeur (15) est configuré pour produire le plan de service en minimisant au moins un parmi le nombre d'itérations de fusion ou le nombre d'itérations de division ou en réduisant au moins un parmi le nombre d'itérations de fusion ou le nombre d'itérations de division à une valeur seuil ou inférieure.

3. Dispositif de traitement d'informations selon la revendication 2, dans lequel le processeur (15) est configuré pour produire le plan de service en minimisant une somme du nombre d'itérations de fusion et du nombre d'itérations de division ou en réduisant la somme à une valeur seuil ou inférieure.

4. Dispositif de traitement d'informations selon l'une quelconque des revendications 1 à 3, dans lequel le processeur (15) est configuré pour :

   allouer l'un ou les plusieurs trains à chacun de la pluralité de services avec une contrainte d'informations de plan d'opération indiquant des opérations à réaliser sur la pluralité de trains et des créneaux horaires au sein desquels les opérations sont réalisées,
   détecter une violation de contrainte dans un cas où l'opération ne peut être réalisée sur le train dans le créneau horaire en raison du service alloué au train, et
   produire le plan de service sur la base de la valeur d'évaluation en fonction d'un nombre de détections de la violation de contrainte et sur au moins un parmi le nombre d'itérations de fusion ou le nombre d'itérations de division.

**5.** Dispositif de traitement d'informations selon la revendication 4, dans lequel

les durées de service de la pluralité de services incluent chacune une heure de départ et une heure d'arrivée, la pluralité de trains présente des rangs prioritaires, et
le processeur (15) est configuré pour réaliser de manière récursive le calcul de la valeur d'évaluation avec la pluralité de trains allouée séquentiellement par ordre décroissant des rangs de priorité à la pluralité de services par ordre chronologique croissant des heures de départ et pour échanger des allocations des trains alloués aux services sur la base de la valeur d'évaluation, et détecte un motif d'allocation avec lequel la valeur d'évaluation est minimisée ou réduite à une valeur seuil ou inférieure et
produire le plan de service sur la base du motif détecté.

**6.** Dispositif de traitement d'informations selon l'une quelconque des revendications 1 à 5, dans lequel

la pluralité des services est déterminée pour chacune d'une pluralité de durées, et
le processeur (15) est configuré pour :

générer, en utilisant de secondes variables qui indiquent s'il faut allouer la pluralité de trains à la pluralité de services pour chacune des durées, une contrainte que l'un ou les plusieurs trains, dont un nombre total de véhicules correspond au nombre total de véhicules requis pour chacune de la pluralité de services, sont alloués à chacune de la pluralité de services,
générer une fonction d'évaluation qui calcule une valeur d'évaluation sur la base d'une somme de premières variables indiquant si deux trains doivent être fusionnés ou divisés pour chacune des durées et chaque paire de deux trains,
calculer des valeurs des secondes variables en minimisant ou quasi-minimisant la valeur d'évaluation sous la contrainte, et produit le plan de service sur la base des valeurs des secondes variables.

**7.** Dispositif de traitement d'informations selon la revendication 6, dans lequel, sur la base d'une condition de connexion de service que les services sont alloués dans un ordre d'un premier service et d'un second service, le processeur (15) est configuré pour ajouter une valeur de pénalité à la valeur d'évaluation dans un cas où un service autre que le second service est alloué à un train facultatif après le premier service.

**8.** Dispositif de traitement d'informations selon la revendication 6 ou 7, dans lequel, pour chacune des durées, le processeur (15) est configuré pour ajouter, sur la base d'une condition de service désignée qui désigne tout service allouable à chaque train parmi la pluralité de services, une valeur de pénalité à la valeur d'évaluation dans un cas où un service non désigné par la condition de service désignée est alloué au train.

**9.** Dispositif de traitement d'informations selon l'une quelconque des revendications 6 à 8, dans lequel le processeur (15) est configuré pour ajouter une valeur de pénalité supérieure à la valeur d'évaluation lorsque la fréquence d'allocation d'un premier train parmi la pluralité de trains est supérieure ou lorsqu'une somme de temps de service ou de distances de service des services alloués est plus longue.

**10.** Dispositif de traitement d'informations selon l'une quelconque des revendications 6 à 9, dans lequel le processeur (15) est configuré pour ajouter une valeur de pénalité supérieure à la valeur d'évaluation lorsque la fréquence d'allocation d'un premier train parmi la pluralité de trains est inférieure ou lorsqu'une somme de temps de service ou de distances de service des services alloués est plus courte.

**11.** Dispositif de traitement d'informations selon l'une quelconque des revendications 6 à 10, dans lequel le processeur (15) est configuré pour ajouter, sur la base d'une condition de service impossible d'allocation qu'une condition d'un train non allouable est déterminée pour chacun des services, une valeur de pénalité à la valeur d'évaluation lorsqu'un service non permis par la condition de service impossible d'allocation est alloué au train.

**12.** Dispositif de traitement d'informations selon l'une quelconque des revendications 6 à 11, dans lequel

un temps pris pour l'opération de division ou l'opération de fusion pour chacun des trains ou chaque endroit où l'opération de division ou l'opération de fusion est réalisée, et
le processeur (15) est configuré pour ajouter une valeur de pénalité supérieure à la valeur d'évaluation lorsque le temps pris pour l'opération de division ou l'opération de fusion est plus long.

**13.** Dispositif de traitement d'informations selon l'une quelconque des revendications 6 à 12, dans lequel

chacun de la pluralité de trains inclut une cabine dans au moins un parmi des véhicules à des extrémités respectives,

lors de l'allocation de deux trains ou plus à un des services, le processeur (15) est configuré pour déterminer un ordre d'agencement dans lequel les deux trains ou plus sont fusionnés, et les deux trains ou plus sont fusionnés dans l'ordre d'agencement par l'opération de fusion,

des cabines de véhicules de tête et de queue d'une unité de train des deux trains ou plus allouée au service sont utilisées pendant l'exécution du service, et

le processeur (15) est configuré pour ajouter une valeur de pénalité supérieure à la valeur d'évaluation en tant que somme de temps d'utilisation de chacune des cabines incluses dans la pluralité des trains s'écarte d'un temps cible de chaque cabine.

**14.** Dispositif de traitement d'informations selon l'une quelconque des revendications 6 à 13, dans lequel

lors de l'allocation de deux trains ou plus à un des services, le processeur (15) est configuré pour déterminer un ordre d'agencement dans lequel les deux trains ou plus sont fusionnés, et les deux trains ou plus sont fusionnés dans l'ordre d'agencement par l'opération de fusion,

le processeur (15) est configuré pour ajouter, à la valeur d'évaluation, une valeur de pénalité conformément à une position de division d'un train divisé à partir des deux trains fusionnés ou plus par l'opération de division et d'une position de fusion du train divisé lorsque le train divisé est fusionné à un autre train par l'opération de fusion.

**15.** Dispositif de traitement d'informations selon l'une quelconque des revendications 1 à 14, dans lequel la pluralité de trains sont chacun un train ferroviaire.

**16.** Dispositif de traitement d'informations selon l'une quelconque des revendications 1 à 15, comprenant en outre des circuits de commande configurés pour commander le déplacement de la pluralité de trains sur la base du plan de service, dans lequel la pluralité de trains sont chacun mobiles sur un itinéraire cible.

**17.** Procédé de traitement d'informations comprenant :

l'acquisition

des informations sur une pluralité de services, chacun incluant une durée de service,

des informations sur un nombre de véhicules nécessaires à l'exécution de chacun de la pluralité de services, et

des informations sur des trains incluant un nombre de véhicules inclus dans chacun d'une pluralité de trains pouvant être fusionnés ou divisés entre deux trains ou plus ; et

la production d'un plan de service en allouant un ou plusieurs trains à chacun de la pluralité de services, un nombre total de véhicules inclus dans l'un ou les plusieurs trains alloués à chacun de la pluralité de services correspond au nombre de véhicules nécessaires au service :

dans lequel la pluralité de trains est allouée de manière répétée à deux services ou plus, les durées de service des deux ou plusieurs services ne se chevauchent pas,

une opération de fusion de deux ou plusieurs trains est nécessaire pour allouer les deux ou plusieurs trains à un de la pluralité de services, et une opération de division des deux ou plusieurs trains fusionnés est nécessaire pour allouer les deux ou plusieurs trains fusionnés à différents services de la pluralité de services, et

le procédé comprend la production du plan de service sur la base d'au moins un parmi un nombre d'itérations de fusion ou un nombre d'itérations de division, de sorte qu'au moins un parmi le nombre d'itérations de fusion ou du nombre d'itérations de division est minimisé, le nombre d'itérations de fusion étant un nombre de fois que l'opération de fusion est réalisée, ou le nombre d'itérations de division étant un nombre de fois que l'opération de division est réalisée.

**18.** Programme informatique qui amène un ordinateur à réaliser un processus comprenant :

l'acquisition

des informations sur une pluralité de services, chacun incluant une durée de service,

des informations sur un nombre de véhicules nécessaires à l'exécution de chacun de la pluralité de services, et

des informations sur des trains incluant un nombre de véhicules inclus dans chacun d'une pluralité de trains pouvant être fusionnés ou divisés entre deux trains ou plus ; et

la production d'un plan de service en allouant un ou plusieurs trains à chacun de la pluralité de services, un nombre total de véhicules inclus dans l'un ou les plusieurs trains alloués à chacun de la pluralité de services correspond au nombre de véhicules nécessaires au service :

dans lequel la pluralité de trains est allouée de manière répétée à deux services ou plus, les durées de service des deux ou plusieurs services ne se chevauchent pas,

une opération de fusion de deux ou plusieurs trains est nécessaire pour allouer les deux ou plusieurs trains à un de la pluralité de services, et une opération de division des deux ou plusieurs trains fusionnés est nécessaire pour allouer les deux ou plusieurs trains fusionnés à différents services de la pluralité de services, et

les processus comprennent la production du plan de service sur la base d'au moins un parmi un nombre d'itérations de fusion ou un nombre d'itérations de division, de sorte qu'au moins un parmi le nombre d'itérations de fusion ou du nombre d'itérations de division est minimisé, le nombre d'itérations de fusion étant un nombre de fois que l'opération de fusion est réalisée, ou le nombre d'itérations de division étant un nombre de fois que l'opération de division est réalisée.

OPERATION 1-03
05:05 DEPARTURE FROM DEPOT A
25:15 ARRIVAL AT DEPOT A

TRAIN 03F

DEPOT
A

TRAIN 01F

TRAIN 02F

DEPOT
A

DEPOT
B

STATION
C

OPERATION 1-02
05:00 DEPARTURE FROM DEPOT B
10:20 ARRIVAL AT DEPOT A

OPERATION 1-01
05:12 DEPARTURE FROM STATION C
11:05 ARRIVAL AT DEPOT B

DEPOT
B

STATION
C

5:00

26:00

FIG. 1

Ⓔ : TRAIN EXAMINATION
C : CLEANING

PLACE ON
INITIAL DAY    6/3 (WEEKDAY)    6/4 (HOLIDAY)

| | | |
|---|---|---|
| TRAIN 01F B | C | Ⓔ |
| TRAIN 02F C | Ⓔ | |
| TRAIN 03F B | | |

$t_1$      $t_2$

| OPERATION NUMBER |
|---|
| A → B |

A : DEPARTURE PLACE
B : ARRIVAL PLACE
$t_1$ : DEPARTURE TIME
$t_2$ : ARRIVAL TIME

WEEKDAY PATTERN

| 1-01 |
|---|
| C → B |

| 1-02 | | 1-04 |
|---|---|---|
| B → A | | A → B |

| 1-03 |
|---|
| B → B |

HOLIDAY PATTERN

| 2-01 |
|---|
| B → B |

| 2-02 |
|---|
| B → B |

FIG. 2A

| 1 |
|---|
| A → B |

○

| 4 |
|---|
| B → A |

×

| 5 |
|---|
| A → A |

FIG. 2B

| PLACE ON INITIAL DAY | 6/3 (WEEKDAY) | 6/4 (HOLIDAY) |
|---|---|---|

TRAIN 01F B

1-02 B → A | C | 1-04 A → B | | E

TRAIN 02F C

1-01 C → B | E | 2-01 B → B

TRAIN 03F B

1-03 B → B | 2-02 B → B

FIG. 3

FIG. 4

PLAN PRODUCTION DEVICE 10

PLAN INFORMATION INPUTTER 21

PLAN DURATION STORAGE 31

SMALL TRAIN INFORMATION STORAGE 32

OPERATION INFORMATION INPUTTER 22

OPERATION INFORMATION STORAGE 33

DEPOT WORK PLAN INPUTTER 23

DEPOT WORK PLAN STORAGE 34

INDIVIDUAL CONDITION INPUTTER 24

INDIVIDUAL CONDITION INFORMATION STORAGE 35

TRAIN ALLOCATION PLAN PRODUCER 15

INITIAL SOLUTION GENERATOR 11

PLAN IMPROVER 12

PLAN EVALUATOR 14

SPLIT-MERGE ITERATION NUMBER MEASURER 14A

CONSTRAINT VIOLATION NUMBER COUNTER 14B

TRAIN ALLOCATION PLAN STORAGE 41

OUTPUTTER 50

FIG. 5

PLAN DURATION

PLAN INITIAL DAY : 2022/6/1
PLAN LAST DAY : 2022/6/30

FIG. 6

SMALL TRAIN INFORMATION

| TRAIN NAME | INITIAL-DAY PLACE | INITIAL-DAY CONNECTED TRAIN | TOTAL NUMBER OF VEHICLES |
|---|---|---|---|
| 01F | A | 04F | 6 |
| 02F | B | 05F | 4 |
| 03F | A | 06F | 6 |
| 04F | A | 01F | 6 |
| 05F | B | 02F | 4 |
| 06F | A | 03F | 6 |
| 07F | B | なし | 4 |

INITIAL-DAY PLACE

01F
(TWO VEHICLES)     A

02F
(TWO VEHICLES)     B

03F
(TWO VEHICLES)     A

04F
(FOUR VEHICLES)    A

05F
(FOUR VEHICLES)    B

06F
(FOUR VEHICLES)    A

07F
(FOUR VEHICLES)    B

# FIG. 7

OPERATION INFORMATION

| OPERATION NAME | DATE | DEPARTURE PLACE | DEPARTURE TIME | ARRIVAL PLACE | ARRIVAL TIME | NUMBER OF VEHICLES |
|---|---|---|---|---|---|---|
| 1-01 | 2022/6/1 | A | 5:16 | A | 8:26 | 6 |
| 1-02 | 2022/6/1 | B | 5:00 | A | 8:16 | 4 |
| 1-03 | 2022/6/1 | B | 5:06 | A | 23:55 | 6 |
| 1-04 | 2022/6/1 | A | 5:00 | B | 23:43 | 6 |
| 1-05 | 2022/6/1 | A | 17:20 | B | 23:56 | 4 |
| 2-01 | 2022/6/2 | A | 5:16 | A | 8:26 | 6 |
| 2-02 | 2022/6/2 | B | 5:00 | A | 8:16 | 4 |
| 2-03 | 2022/6/2 | B | 5:06 | A | 23:55 | 6 |
| 2-04 | 2022/6/2 | A | 5:00 | B | 23:43 | 6 |
| 2-05 | 2022/6/2 | A | 17:20 | B | 23:56 | 4 |

WEEKDAY

OPERATION 1-01
(SIX VEHICLES)

A "TRAIN" POSSIBLE A
5:16 OPERATION 8:26

OPERATION 1-02
(FOUR VEHICLES)

B "TRAIN" POSSIBLE A
5:00 OPERATION 8:16

OPERATION 1-03
(SIX VEHICLES)

B                                A
5:06                          23:55

OPERATION 1-04
(SIX VEHICLES)

A                                B
5:00                          23:43

OPERATION 1-05
(FOUR VEHICLES)

A                    B
17:20            23:56

FIG. 8

DEPOT WORK PLAN

| SMALL TRAIN NAME | DATE | WORK NAME | EXECUTION PLACE | EXECUTION TIME SLOT |
|---|---|---|---|---|
| 01F | 2022/6/1 | TRAIN EXAMINATION | A | 10:00-11:00 |
| 02F | 2022/6/5 | TRAIN EXAMINATION | A | 10:00-11:00 |
| 03F | 2022/6/4 | TRAIN EXAMINATION | A | 13:00-14:00 |
| 04F | 2022/6/3 | TRAIN EXAMINATION | A | 13:00-14:00 |
| 05F | 2022/6/2 | TRAIN EXAMINATION | A | 10:00-11:00 |
| 06F | 2022/6/2 | TRAIN EXAMINATION | A | 13:00-14:00 |
| 07F | 2022/6/1 | TRAIN EXAMINATION | A | 13:00-14:00 |
| 01F | 2022/6/5 | CLEANING | A | 10:00-12:00 |
| 02F | 2022/6/4 | CLEANING | A | 13:00-15:00 |
| . . . | . . . | . . . | . . . | . . . |

# FIG. 9

・OPERATION CONNECTION CONDITION
  (EXAMPLE: OPERATION d-05 IS ALLOCATED AFTER OPERATION d-01 WHENEVER POSSIBLE)
  (EXAMPLE: NO OPERATION IS ALLOCATED AFTER OPERATION d-02 WHENEVER POSSIBLE)
  (EXAMPLE: WEEKDAY OPERATION d-03 IS ALLOCATED ON NEXT DAY AFTER WEEKDAY OPERATION d-05 WHENEVER POSSIBLE)
・DESIGNATED OPERATION CONDITION (ALLOTMENT POSSIBLE OPERATION CONDITION OF EXAMINATION/CLEANING/WORK DAY)
  EXAMPLE: NO OPERATION OTHER THAN OPERATIONS d-01 AND d-05 IS ALLOCATED ON WEEKDAY OF RAILWAY TRAIN
  EXAMINATION
  EXAMPLE: NO OPERATION IS ALLOCATED ON HOLIDAY OF CLEANING
・PRIORITIZED/NON-PRIORITIZED TRAIN CONDITION
  EXAMPLE: TRAIN F01 IS USED WHENEVER POSSIBLE
  EXAMPLE: TRAIN F02 IS NOT USED WHENEVER POSSIBLE
・ALLOTMENT IMPOSSIBLE OPERATION CONDITION
  EXAMPLE: ONLY EITHER OF TRAINS F03 AND F04 IS ALLOCATED TO OPERATION d-03
・DEPOT CONDITION
  EXAMPLE: n MINUTES ARE NEEDED FOR SPLIT-MERGE WORK AT DEPOT A
  EXAMPLE: AT DEPOT A, RELEASED SMALL TRAIN CAN BE DIRECTLY CONNECTED
  TO ANOTHER TRAIN BUT TWO SMALL TRAINS CANNOT BE INTERCHANGED
・CAB CONDITION
  EXAMPLE: UPBOUND CAB IS USED AT SMALL TRAIN F01 WHENEVER POSSIBLE

# FIG.10

SMALL TRAINS
AVAILABLE ON 6/1,
THEIR CONNECTION
RELATION, THEIR
INITIAL-DAY PLACES
(A OR B)
"6/1 TRAIN"

| 01F | 04F | A
| TWO VEHICLES | FOUR VEHICLES |

"6/2 TRAIN"

| 02F | 05F | B
| TWO VEHICLES | FOUR VEHICLES |

"6/2 TRAIN"

| 03F | 06F | A
| TWO VEHICLES | FOUR VEHICLES |

"6/1 TRAIN"

| 07F | B
| FOUR VEHICLES |

OPERATIONS ON 6/1
(FOUR VEHICLES AND SIX VEHICLES)
OPERATION 1-01 (SIX VEHICLES)

A "TRAIN" POSSIBLE A
5:16   OPERATION   8:26

OPERATION 1-05
(FOUR VEHICLES)

OPERATION 1-02
(FOUR VEHICLES)

| A | B
| 17:20 | 23:56

B "TRAIN" POSSIBLE A
5:00   OPERATION   8:16

OPERATION 1-03 (SIX VEHICLES)

| B | A
| 5:06 | 23:55

OPERATION 1-04 (SIX VEHICLES)

| A | B
| 5:00 | 23:43

OPERATIONS ON 6/2
(FOUR VEHICLES AND SIX VEHICLES)
OPERATION 2-01 (SIX VEHICLES)

A "TRAIN" POSSIBLE A
5:16   OPERATION   8:26

OPERATION 2-05
(FOUR VEHICLES)

OPERATION 2-02
(FOUR VEHICLES)

| A | B
| 17:20 | 23:56

B "TRAIN" POSSIBLE A
5:00   OPERATION   8:16

OPERATION 2-03 (SIX VEHICLES)

| B | A
| 5:06 | 23:55

OPERATION 2-04 (SIX VEHICLES)

| A | B
| 5:00 | 23:43

# FIG.11

41

TRAIN ALLOCATION
PLAN INFORMATION

| OPERATION NAME | SMALL TRAIN |
|---|---|
| 1 - 01 | 01F,04F |
| 1 - 02 | 07F |
| 1 - 03 | 02F, 05F |
| 1 - 04 | 03F, 06F |
| 1 - 05 | 04F |
| 2 - 01 | 02F, 05F |
| 2 - 02 | 06F |
| 2 - 03 | 03F,04F |
| 2 - 04 | 01F, 07F |
| 2 - 05 | 06F |
| . . . | . . . |

# FIG.12

START

Step 1:PRODUCE CONSTRAINT CONDITIONS

Step 2:p← INITIAL SOLUTION PRODUCED BY
INITIAL SOLUTION PRODUCER

REPEAT FOR PREDETERMINED NUMBER OF TIMES

Step 3 : COUNT THE NUMBER OF TIMES OF CONSTRAINT
VIOLATION AND THE NUMBER OF TIMES OF SPLIT-MERGE

CONTINUE SEARCH? — NO

YES

Step 4:p←IMPROVED SOLUTION GENERATED BY PLAN
IMPROVER (SPECIFICALLY, LARGE-SCALE LOCAL
SEARCH USING SMB(h1, thre) THAT PERFORMS SEARCH
WITHIN DISTANCE thre IS REPEATED WITH STARING
POINT AT ONE NG TRAIN h1

OUTPUT PROVISIONAL
SOLUTION p AND END

OUTPUT P AND END
(PRODUCTION
SUCCESSFUL)

FIG.13

SMALL TRAINS
AVAILABLE ON 6/1,
THEIR CONNECTION
RELATION, THEIR
INITIAL-DAY PLACES
(A OR B)

"6/1 TRAIN"

| 01F | 04F | A |

(TWO VEHICLES) (FOUR VEHICLES)

"6/2 TRAIN"

| 02F | 05F | B |

(TWO VEHICLES) (FOUR VEHICLES)

"6/2 TRAIN"

| 03F | 06F | A |

(TWO VEHICLES) (FOUR VEHICLES)

"6/1 TRAIN"

| 07F | B |

(FOUR VEHICLES)

6/1

OPERATION 1-01 (SIX VEHICLES)

A 1-01a (TWO VEHICLES) A
5:16 8:26
A 1-01b (FOUR VEHICLES) A
5:16 8:26

OPERATION 1-05
(FOUR VEHICLES)

OPERATION 1-02
(FOUR VEHICLES)

A 1-05 (FOUR VEHICLES) B
17:20 23:56

B 1-02 (FOUR VEHICLES) A
5:00 8:16

OPERATION 1-03
(SIX VEHICLES)

B 1-03a (TWO VEHICLES) A
5:06 23:55
B 1-03b (FOUR VEHICLES) A
5:06 23:55

OPERATION 1-04 (SIX VEHICLES)

A 1-04a (TWO VEHICLES) B
5:00 23:44
A 1-04b (FOUR VEHICLES) B
5:00 23:44

6/2

OPERATION 2-01 (SIX VEHICLES)

A 2-01a (TWO VEHICLES) A
5:16 8:26
A 2-01b (FOUR VEHICLES) A
5:16 8:26

OPERATION 2-05
(FOUR VEHICLES)

OPERATION 2-02
(FOUR VEHICLES)

A 2-05 (FOUR VEHICLES) B
17:20 23:56

B 2-02b (FOUR VEHICLES) A
5:00 8:16

OPERATION 2-03
(SIX VEHICLES)

B 2-03a (TWO VEHICLES) A
5:06 23:55
B 2-03b (FOUR VEHICLES) A
5:06 23:55

OPERATION 2-04 (SIX VEHICLES)

A 2-04a (TWO VEHICLES) B
5:00 23:44
A 2-04b (FOUR VEHICLES) B
5:00 23:44

# FIG.14

CONNECTION
RELATION BEFORE
DEPARTURE ON 6/1

6/1 TRAIN

6/1

| 01F (TWO VEHICLES) | A | A 5:00  1-04a (TWO VEHICLES)  B 23:44 |

| 02F (TWO VEHICLES) | B | B 5:06  1-03a (TWO VEHICLES)  A 23:55 |

SMALL TRAIN

| 03F (TWO VEHICLES) | A | A 5:16  1-01a (TWO VEHICLES)  A 8:26 |

| 04F (FOUR VEHICLES) | A | A 5:00  1-04b (FOUR VEHICLES)  B 23:44 |

6/2 TRAIN

| 05F (FOUR VEHICLES) | B | B 1-02 (FOUR VEHICLES) A  5:00  8:16 |

6/2 TRAIN

| 06F (FOUR VEHICLES) | A | A 5:16 1-01b (FOUR VEHICLES) A 8:26    A 1-05 (FOUR VEHICLES) B 17:20  23:56 |

6/1 TRAIN

| 07F (FOUR VEHICLES) | B | B 5:06  1-03b (FOUR VEHICLES)  A 23:55 |

6/2

B 5:06  2-03a (TWO VEHICLES)  A 23:55

A 5:00  2-04a (TWO VEHICLES)  B 23:44

A 5:16 2-01a (TWO VEHICLES) A 8:26

B 2-02 (FOUR VEHICLES) A   A 2-05 (FOUR VEHICLES) B
5:00   8:16   17:20   23:56

A 5:00  2-04b (FOUR VEHICLES)  B 23:44

B 5:06  2-03b (FOUR VEHICLES)  A 23:55

A 5:16 2-01b (FOUR VEHICLES) A 8:26

# FIG.15

CONNECTION
RELATION BEFORE
DEPARTURE ON 6/1

6/1

6/2

| 6/1 TRAIN | 6/1 TRAIN |
|---|---|
| 01F 04F (TWO VEHICLES) (FOUR VEHICLES) | 01F (TWO VEHICLES) A |
| 6/2 TRAIN | 02F (TWO VEHICLES) B |
| 02F 05F (TWO VEHICLES) (FOUR VEHICLES) | 03F (TWO VEHICLES) A |
| 6/2 TRAIN | |
| 03F 06F (TWO VEHICLES) (FOUR VEHICLES) | |
| 6/1 TRAIN | |
| 07F (FOUR VEHICLES) | 04F (FOUR VEHICLES) A |
| | 6/2 TRAIN |
| | 05F (FOUR VEHICLES) B |
| SMALL TRAIN | 6/2 TRAIN |
| | 06F (FOUR VEHICLES) A |
| | 6/1 TRAIN |
| | 07F (FOUR VEHICLES) B |

A $\underset{5:00}{A}$ 1-04a (TWO VEHICLES)   TRAIN× $\underset{23:44}{B}$

B $\underset{5:06}{B}$ 1-03a (TWO VEHICLES) $\underset{23:55}{A}$

$\underset{5:16}{A}$ 1-01a (TWO VEHICLES) $\underset{8:26}{A}$

$\underset{5:00}{A}$ 1-04b (FOUR VEHICLES) $\underset{23:44}{B}$

$\underset{5:00}{B}$ 1-02 (FOUR VEHICLES) $\underset{9:16}{A}$

$\underset{5:16}{A}$ 1-01b (FOUR VEHICLES) $\underset{8:26}{A}$ → $\underset{17:20}{A}$ 1-05 (FOUR VEHICLES) $\underset{23:56}{B}$

$\underset{5:06}{B}$ 1-03b (FOUR VEHICLES)   TRAIN× $\underset{23:55}{A}$

$\underset{5:06}{B}$ 2-03a (TWO VEHICLES) $\underset{23:55}{A}$

$\underset{5:00}{A}$ 2-04a (TWO VEHICLES) $\underset{23:44}{B}$

$\underset{5:16}{A}$ 2-01a (TWO VEHICLES) $\underset{8:26}{A}$

$\underset{5:00}{B}$ 2-02 (FOUR VEHICLES) $\underset{8:16}{A}$   $\underset{17:20}{A}$ 2-05 (FOUR VEHICLES) $\underset{23:56}{B}$

$\underset{5:00}{A}$ 2-04b (FOUR VEHICLES)   TRAIN× $\underset{23:44}{B}$

$\underset{5:06}{B}$ 2-03b (FOUR VEHICLES)   TRAIN× $\underset{23:55}{A}$

$\underset{5:16}{A}$ 2-01b (FOUR VEHICLES) $\underset{8:26}{A}$

FIG.16

46

FIRST DAY    SECOND DAY

SMALL TRAIN 01F
(FOUR VEHICLES)

c
B ➜ A

b-4
A ➜ B

CASE 1

SMALL TRAIN 02F
(THREE VEHICLES)

a-3
B ➜ A

b-3
A ➜ B

CASE 2

SMALL TRAIN 03F
(FOUR VEHICLES)

a-4
B ➜ A

d
A ➜ A

CASE 3

# FIG.17

FIG.18

6/1

6/2

6/1 TRAIN

| 01F (TWO VEHICLES) | A |
| 02F (TWO VEHICLES) | B |
| 03F (TWO VEHICLES) | A |

A 5:00 1-04a (TWO VEHICLES) TRAIN× B 23:44

B 5:06 1-03a (TWO VEHICLES) A 23:55

A 5:16 1-01a (TWO VEHICLES) A 8:26

B 5:06 2-03a (TWO VEHICLES) A 23:55

A 5:00 2-04a (TWO VEHICLES) B 23:44

A 5:16 2-01a (TWO VEHICLES) A 8:26

EXECUTE EXCHANGE
CALCULATION

6/1 TRAIN

TRAIN ◯

| 01F (TWO VEHICLES) | A |
| 02F (TWO VEHICLES) | B |
| 03F (TWO VEHICLES) | A |

A 5:16 1-01a (TWO VEHICLES) A 8:26

B 5:06 1-03a (TWO VEHICLES) A 23:55

A 5:00 1-04a (TWO VEHICLES) B 23:44

A 5:16 2-01a (TWO VEHICLES) A 8:26

A 5:00 2-04a (TWO VEHICLES) B 23:44

B 5:06 2-03a (TWO VEHICLES) A 23:55

FIG.19

EP 4 524 841 B1

FIG.20

50

START Backtrack (K, h)

Step 4-1:
A ← CURRENT PLAN (EVALUATION VALUE f(A))

REPEAT PATH GENERATION (LIST PATH p ALONG
WHICH THE NUMBER OF TIMES OF EXCHANGE IS
K OR LESS WITH STARTING POINT AT TRAIN h)

Step 4-2:
$X_1, X_2, ..., X_k$ ← EXCHANGE SEQUENCE CORRESPONDING TO PATH p
$A' \leftarrow X_k \cdot X_{k-1} \cdots X_1 \cdot A$

f(A')<f(A)?   YES

NO

Step 4-3:
EXECUTE Backtrack (K-h, h') WITH STARTING POINT AT
ANOTHER TRAIN h' TO WHICH CONSTRAINT VIOLATION
OR THE LIKE HAS OCCURRED IN PROCESS OF A → A'

f(A')<f(A)?   YES

NO

END

OUTPUT A' AND END

FIG.21

FIG.22

FIG.23

EP 4 524 841 B1

FIG.24

FIG.25

01F (TWO VEHICLES)

02F (TWO VEHICLES)

03F (TWO VEHICLES)

04F (FOUR VEHICLES)

05F (FOUR VEHICLES)

06F (FOUR VEHICLES)

07F (FOUR VEHICLES)

08F (SIX VEHICLES)

09F (SIX VEHICLES)

WEEKDAY

OPERATION 1-01 (SIX VEHICLES)

| A | "TRAIN" | A |
| 5:16 | POSSIBLE OPERATION | 8:26 |

OPERATION 1-02 (FOUR VEHICLES)

| B | "TRAIN" | B |
| 5:00 | POSSIBLE OPERATION | 23:56 |

OPERATION 1-03 (SIX VEHICLES)

| B | A |
| 5:06 | 23:55 |

OPERATION 1-04 (SIX VEHICLES)

| A | B |
| 5:00 | 23:43 |

# FIG.26

FIG.27

FIG.28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2762382 A1
- US 2022335351 A1
- US 2020055530 A1
- JP 5075577 B